(19) Europäisches Patentamt
European Patent Office
Office européen des brevets

(11) **EP 4 350 649 B1**

(12) **EUROPÄISCHE PATENTSCHRIFT**

(45) Veröffentlichungstag und Bekanntmachung des Hinweises auf die Patenterteilung:
**18.06.2025   Patentblatt 2025/25**

(21) Anmeldenummer: **24158521.5**

(22) Anmeldetag: **26.04.2021**

(51) Internationale Patentklassifikation (IPC):
*C09K 11/56* (2006.01)   *B42D 25/29* (2014.01)
*B42D 25/30* (2014.01)   *G07D 7/1205* (2016.01)
*B42D 25/382* (2014.01)   *B42D 25/387* (2014.01)
*C09K 11/58* (2006.01)   *C09K 11/60* (2006.01)
*G07D 7/202* (2016.01)

(52) Gemeinsame Patentklassifikation (CPC):
**C09K 11/565; B42D 25/29; B42D 25/382; B42D 25/387; C09K 11/584; C09K 11/605; G07D 7/1205; G07D 7/205**

(54) **SICHERHEITSMERKMAL UND VERFAHREN ZU DESSEN DETEKTION SOWIE SICHERHEITS- ODER WERTDOKUMENT**

SECURITY FEATURE AND METHOD FOR DETECTING SAME, AND SECURITY OR VALUABLE DOCUMENT

CARACTÉRISTIQUE DE SÉCURITÉ ET SON PROCÉDÉ DE DÉTECTION AINSI QUE DOCUMENT DE SÉCURITÉ OU DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **27.04.2020   DE 102020111461**

(43) Veröffentlichungstag der Anmeldung:
**10.04.2024   Patentblatt 2024/15**

(62) Dokumentnummer(n) der früheren Anmeldung(en) nach Art. 76 EPÜ:
**21726331.8 / 4 143 272**

(73) Patentinhaber: **Bundesdruckerei GmbH**
**10969 Berlin (DE)**

(72) Erfinder:
• **STARICK, Detlef**
  **17491 Greifswald (DE)**
• **PAESCHKE, Manfred**
  **16348 Wandlitz (DE)**
• **PETERS, Florian**
  **10437 Berlin (DE)**
• **HEISE, Roland**
  **13187 Berlin (DE)**
• **HAUSSMANN, Guido**
  **12203 Berlin (DE)**
• **KOCH, Matthias**
  **12209 Berlin (DE)**
• **VOH, Monika**
  **98597 Breitungen (DE)**
• **RÖSLER, Sven**
  **99817 Eisenach (DE)**
• **RÖSLER, Sylke**
  **99817 Eisenach (DE)**
• **BOS, Adrie**
  **3994 JS Houten (NL)**
• **DEICHSEL, Andreas**
  **13503 Berlin (DE)**

(74) Vertreter: **Bittner, Thomas L.**
**Boehmert & Boehmert**
**Anwaltspartnerschaft mbB**
**Pettenkoferstrasse 22**
**80336 München (DE)**

(56) Entgegenhaltungen:
EP-A1- 3 083 882      WO-A1-01/34723
WO-A1-2010/106933     WO-A1-2015/091237

- PARK ET AL: "White-electroluminescent device with ZnS:Mn, Cu, Cl phosphor", JOURNAL OF LUMINESCENCE, ELSEVIER BV NORTH-HOLLAND, NL, vol. 126, no. 2, 17 May 2007 (2007-05-17), pages 566 - 570, XP022082768, ISSN: 0022-2313, DOI: 10.1016/J.JLUMIN.2006.10.012

## Beschreibung

Die vorliegende Erfindung betrifft zunächst ein Sicherheitsmerkmal für ein Sicherheits- oder Wertdokument. Das Sicherheitsmerkmal umfasst einen zinksulfidischen Leuchtstoff, welcher einerseits als Elektroluminophor im tief roten Spektralbereich emittiert und andererseits ein weiteres Lumineszenzverhalten zeigt. Im Weiteren betrifft die Erfindung ein Sicherheits- und Wertdokument, bei welchem es sich beispielsweise um eine Banknote oder um einen Reisepass, einen Personalausweis, einen Führerschein oder um eine Briefmarke handeln kann. Die Erfindung betrifft zudem ein Verfahren zur Detektion und/oder Verifikation des erfindungsgemäßen Sicherheitsmerkmales.

Zinksulfidische Leuchtstoffe gehören zu den am längsten bekannten und weltweit bestuntersuchten lumineszierenden Materialien. In Abhängigkeit von der konkreten stofflichen Zusammensetzung und den Details der Leuchtstoffsynthese können sie gänzlich unterschiedliche Lumineszenzeigenschaften aufweisen, sodass vielfältige Anwendungen in unterschiedlichen technischen Bereichen resultieren. ZnS-Leuchtstoffe haben sowohl als effiziente Photoluminophore (PL), als Kathodoluminophore (CRT) für Schwarzweiß- und Farbbildröhren, als Nachleuchtpigmente (Afterglow) als auch als Elektroluminophore für Dünnschicht (TFEL)- und Dickschicht (AC Powder Electoluminescence, ACPEL)-Folien bzw. Displays Anwendung gefunden.

Die zur Elektrolumineszenz fähigen pulverförmigen ZnS-Leuchtstoffe sind zumeist mit Kupfer (Cu) und/oder Mangan (Mn) dotiert und enthalten darüber hinaus zumeist weitere als Koaktivatoren fungierende ein- bzw. dreiwertige Ionen, beispielsweise die der Elemente Cl, Br, I und/oder Al, welche ebenfalls in die ZnS-Matrix eingebaut werden können. Sie lumineszieren bei Anregung mit elektrischer Wechselspannung vorzugsweise im blauen, grünen oder orangefarbigen Spektralbereich, wobei diese Leuchtstoffe nach Literaturangaben zumeist eine vorzugsweise kubische Kristallstruktur aufweisen (vgl. SHIONOYA, S.; YEN, W. M.: Phosphor Handbook. Boca Raton, FL: CRC Press, 1999. S. 581-621. - ISBN 0-8493-7560-6).

Für die Herstellung konventioneller zinksulfidischer Elektroluminophore für ACPEL-Anwendungen werden in der Fachliteratur mehrstufige Präparationsverfahren vorgeschlagen, die in unterschiedlicher Weise modifiziert werden können. Derartige Modifikationen betreffen beispielsweise auch die für die Herstellung von feinkörnigen und somit druckfähigen elektrolumineszierenden ZnS-Pulvern vorgeschlagenen Syntheseverfahren, die umfänglich in den Patentschriften EP 1 151 057 B1 und EP 3 083 882 B1 beschrieben sind. Prinzipiell sind die Verfahren zur Herstellung leistungsfähiger zinksulfidischer EL-Pigmente durch die im Folgenden aufgeführten Prozessschritte gekennzeichnet:

1. Intensives Vermischen der Ausgangsstoffe zu einem Gemenge möglichst hoher Homogenität,
2. Glühen des Gemenges bei Temperaturen zwischen 800 °C und 1.300 °C in einer ausgewählten Glühatmosphäre (Luft oder Stickstoff oder Stickstoff mit einem Wasserstoffanteil von bis zu 10 %),
3. Vermahlen des Glühgutes und Waschen mit $H_2O$ und/oder optionales Ätzen mit verdünnten Mineralsäuren,
4. Nachdotieren des Glühgutes mit einer bestimmten Menge einer geeigneten Cu-Quelle,
5. Erneutes Glühen (Temperung) der getrockneten Materialmischung bei Temperaturen zwischen 200 °C und 900 °C
6. Erneutes Vermahlen und Waschen des Glühgutes, Behandlung des Glühgutes mit Mineralsäuren und/oder Komplexbildnern zur Entfernung oberflächlich ausgeschiedenen Kupfersulfides,
7. Abschließende Temperung der zinksulfidischen Leuchtstoffpulver bei Temperaturen unterhalb von 500 °C und Siebung.

Dabei dienen die Schritte 3, 4 und 5 vor allem der Erzeugung von $Cu_xS$-Ausscheidungen an Gitterdefekten und Versetzungen der Zinksulfidmatrix, die nach einheitlicher Literaturauffassung für eine effiziente ACPEL-Elektrolumineszenz pulverförmiger ZnS-Leuchtstoffe erforderlich sind.

Die konventionelle technische Anwendung zinksulfidischer Elektroluminophore erfolgt zumeist in Form sogenannter Elektrolumineszenzfolien, bei denen die Leuchtstoffpartikel im Sinne einer Kondensatoranordnung zwischen zwei Elektroden und isolierenden Schichten angeordnet sind. Üblicherweise erfolgt die Anregung der Elektrolumineszenz derartiger EL-Folien mit der Hilfe elektrischer Wechselfelder, die Spannungen von etwa 110 V und Frequenzen von etwa 400 Hz aufweisen.

Die für die Herstellung derartiger Elektrolumineszenzfolien verwendeten zinksulfidischen Leuchtstoffteilchen werden zur Erhöhung der Lebensdauer der Folien zumeist mit dünnen Wasserdampf sperrenden Schichten, die beispielsweise aus $SiO_2$, $TiO_2$, $Al_2O_3$ oder aber aus anderen geeigneten Materialien bestehen können, versehen. Diese auch als Mikroverkapselung bezeichnete Beschichtung kann beispielsweise unter Zuhilfenahme solcher Verfahren wie der Chemical Vapour Deposition (CVD) erfolgen. Anwendungsbeispiele für derartige Elektrolumineszenzfolien bzw. -lampen sind Display-Hintergrundbeleuchtungen, Leucht- und Markierungselemente, wie sie in Flugzeugen und Kraftfahrzeugen, in Gebäuden oder zur Herstellung von Werbeinstallationen zum Einsatz gelangen.

Zu ausschließlich mit Kupfer dotierten zinksulfidischen Elektrolumineszenz-Leuchtstoffen, die im tief roten Spektralbereich mit Emissionsmaxima zwischen 580 nm und 780 nm lumineszieren, konnten in der Fachliteratur keinerlei technische Anwendungen gefunden werden. Elektrolumineszierende Materialien dieser Art wurden vor allem in älteren wissenschaftlichen Veröffentlichungen (vergl. KRÖGER, F. A.; DIKHOFF, J. A. M.: The Function of Oxygen in Zinc Sulfide Phosphors. In: J. Electrochem. Soc. Bd. 99, 1952. S. 144-154. - ISSN: 0013-4651; HOOGENSTRAATEN, W.: Electron Traps in Zinc-Sulfide Phosphors. In: Philips Res. Repts, Bd. 13, 1958. S. 515-693. - ISSN 0031-7918 sowie GRASSER, R.; SCHARMANN, A.; WETZEL, G.: Thermolumineszenz von kubischem und hexagonalem ZnS/Cu. In: Z. Naturforsch., Bd. 28a, 1973, Nr. 12, S. 1378-1379. - ISSN 0932-0784), aber beispielsweise auch im dem oben zitierten "Phosphor Handbook" beschrieben. Bei der Bewertung dieser Literatur wird deutlich, dass in Bezug auf die Effizienz dieser Art von Elektrolumineszenz sowie bezüglich der verantwortlichen Mechanismen und Strahlungszentren nach wie vor große Unklarheiten bestehen.

Die Verwendung pulverförmiger ZnS-Elektroluminophore zum Fälschungsschutz von Sicherheits- und Wertdokumenten, wie beispielsweise Banknoten, Reisepässen, Personalausweisen, Führerscheine usw. wurde erstmals in der Patentschrift EP 0 964 791 B1 beschrieben. Dabei wurde bereits in dieser Patentschrift davon ausgegangen, die erforderlichen zinksulfidischen Elektrolumineszenz-Pigmente mit Hilfe der üblichen Drucktechnologien, wie beispielsweise entsprechender Tief-, Flexo-, Offset- oder Siebdruckverfahren auf bzw. in der Matrix der jeweiligen Sicherheitsdokumente anzuordnen, ohne dabei den konventionellen, klassischen Kondensatoraufbau anzustreben. Weiterführende Untersuchungen erbrachten den Nachweis, dass dies möglich ist und dass die Echtheitsverifizierung der solchermaßen auf oder in die Sicherheits- oder Wertdokumente applizierten Elektroluminophore zudem über die kontaktlose Heranführung des elektrischen Wechselfeldes an die Lumineszenzpigmente erreicht werden kann (vergleiche EP 1 059 619 B1, EP 1 149 364 B1 und DE 10 2008 047 636 A1).

Allerdings sind in einem solchen Falle vergleichsweise hochfrequente Hochspannungswechselfelder erforderlich, um eine sichere stationäre oder aber vorteilhafterweise eine Hochgeschwindigkeitsdetektion der resultierenden Lumineszenzsignale zu gewährleisten. Andererseits wurde in diesem Zusammenhang auch gefunden, dass durch die Kombination geeigneter EL-Pigmente mit sogenannten Feldverdrängungselementen eine Erhöhung der an der Oberfläche der Leuchtstoffteilchen wirksamen lokalen Feldstärke und somit eine Absenkung der kontaktlos auferlegten äußeren Hochspannung erreicht werden kann. Diese Zusammenhänge sind beispielsweise in den Patentschriften EP 1 631 461 B1 und EP 1 748 903 B1 umfassend beschrieben.

Eine entscheidende Voraussetzung für die technische Realisierbarkeit druckfähiger und sicher verifizierbarer elektrolumineszierender Sicherheitsmerkmale ist in der Verfügbarkeit entsprechend feinkörniger Leuchtstoffe mit hoher Signalstärke, hoher Alterungsbeständigkeit und vorzugsweise exklusivem Lumineszenzverhalten zu sehen. Solchermaßen geeignete pulverförmige Elektroluminophore sind beispielsweise in der EP 1 151 057 B1 offenbart. In dieser Patentschrift werden Verfahren zur Herstellung blau und grün emittierender EL-Pigmente mit ausschließlich kubischer Kristallitstruktur und mittleren Korngrößen zwischen 2 $\mu$m und 5 $\mu$m bzw. 5 $\mu$m und 15 $\mu$m vorgestellt, deren Eignung für die Erstellung gedruckter Sicherheitsmerkmale nachgewiesen werden konnte.

Weitere für die drucktechnische Erstellung elektrolumineszierender Sicherheitsmerkmale geeignete Leuchtstoffe sind in der EP 3 083 882 B1 beschrieben. Dabei zeigen die in dieser Patentschrift benannten pulverförmigen zinksulfidischen Leuchtstoffe zusätzlich zu ihrer spezifischen blauen Elektrolumineszenz eine intensive und somit mit der Hilfe herkömmlicher Sensoren detektierbare Photolumineszenz, die außerdem durch einen charakteristischen blaugrünen Farbwechsel der Emission bei Variation der UV-Anregungsbedingungen gekennzeichnet ist.

Die Aufgabe der vorliegenden Erfindung besteht in der Bereitstellung eines für ein Sicherheits- oder Wertdokument geeigneten Sicherheitsmerkmales mit einem zinksulfidischen Elektroluminophor, welcher sich auf Grund seiner speziellen Lumineszenzeigenschaften in exklusiver Weise von den in unterschiedlichen technischen Bereichen angewendeten EL-Pigmenten unterscheidet. Die Aufgabe der Erfindung besteht zudem darin, ein Verfahren zur Detektion und/oder Verifikation eines solchen Sicherheitsmerkmales bereitzustellen. Im Weiteren ist ein entsprechendes Sicherheits- oder Wertdokument bereitzustellen.

Die genannte Aufgabe wird gelöst durch ein Sicherheitsmerkmal gemäß dem beigefügten Anspruch 1, durch ein Sicherheits- oder Wertdokument gemäß dem beigefügten nebengeordneten Anspruch 10 und durch ein Verfahren gemäß dem beigefügten nebengeordneten Anspruch 11.

Im Folgenden werden zunächst einige Begriffe definiert, wie sie im Sinne der Erfindung verstanden werden.

Als Lumineszenz wird die von einem physikalischen System beim Übergang von einem angeregten Zustand in den Grundzustand emittierte elektromagnetische Strahlung bezeichnet. In der Regel betrifft die Lumineszenz die Umwandlung energiereicherer in energieärmere Strahlung (Down-Conversion), wobei der Unterschied zwischen der Wellenlänge der absorbierten Strahlung zur Wellenlänge der emittierten Strahlung als Stokes-Verschiebung bezeichnet wird. In Abhängigkeit vom Charakter der anregenden Strahlung und dem spektralen Bereich der emittierten elektromagnetischen Strahlung werden verschiedene Lumineszenzarten (beispielsweise Photolumineszenz, Kathodolumineszenz, Röntgenlumineszenz, Elektrolumineszenz etc.) unterschieden.

Die Anti-Stokes-Lumineszenz (Up-Conversion) ist ein Spezialfall der Lumineszenz, bei der nach vorheriger, ggf. mehrstufiger Infrarot (IR)-induzierter Stimulation oder Anregung eine Emission in einem energiereicheren Spektralbereich, beispielsweise im Bereich des sichtbaren Lichtes erfolgt.

Bei der Elektrolumineszenz handelt es sich um eine spezielle Form der Lumineszenz, bei der anorganische oder organische Feststoffe durch das Anlegen elektrischer Gleich- oder Wechselspannungsfelder zur Emission elektromagnetischer Strahlung, beispielsweise im sichtbaren Spektralbereich angeregt werden. In der vorliegenden Erfindung wird der Begriff Elektrolumineszenz ausschließlich für die mit der Hilfe elektrischer Wechselfelder anregbare Lumineszenz pulverförmiger anorganischer Leuchtstoffe (engl.: AC Powder Electroluminescence, ACPEL) verwendet.

Leuchtstoffe sind organische oder anorganische chemische Verbindungen, die bei Anregung mit elektromagnetischer oder Teilchenstrahlung oder nach Anregung mittels elektrischer Felder Lumineszenz-Erscheinungen zeigen. Um dies zu ermöglichen, werden in die von den chemischen Verbindungen gebildeten Leuchtstoffgrundgitter (Leuchtstoffmatrizen), als Strahlungszentren wirkende Aktivatorionen und gegebenenfalls zusätzlich Koaktivatorionen eingebaut. Häufig sind diese Leuchtstoffe als Festkörper, insbesondere in Form von Pigmenten, ausgeprägt. Die im Zusammenhang mit der vorliegenden Erfindung beschriebenen elektrolumineszierenden Leuchtstoffe werden verschiedentlich auch als Elektroluminophore oder Elektrolumineszenz (EL)-Pigmente bezeichnet. Die chemische Verbindung Zinksulfid (ZnS) stellt das am häufigsten verwendete Leuchtstoffgrundgitter für die Herstellung von ACPEL-Pigmenten dar.

Für die Kristallstruktur der ZnS-Partikel sind prinzipiell zwei Strukturtypen charakteristisch, zum einen die unterhalb der Phasenumwandlungs-Temperatur von etwa 1.020 °C stabile kubische Sphalerit- bzw. Zinkblende-Struktur, und die oberhalb von etwa 1.020 °C stabile hexagonale Wurzit-Struktur. Andererseits ist das Zinksulfid laut Literaturangaben (vergl. WITHNALL, R. et al.: Structure and Morphology of ACEL ZnS:Cu,Cl Phosphor Powder Etched by Hydrochloric Acid. In: J. Electrochem. Soc., Bd. 156, 2009, Nr. 11, S. J326-J332. - ISSN 0013-4651) aber geradezu als ein Paradebeispiel für das Auftreten von polytypen Strukturmodifikationen anzusehen, die sich aus der große Anzahl möglicher Stapelsequenzen sowie aus der starken Tendenz zur Zwillingskristallbildung ergeben. In der Literatur wird davon ausgegangen, dass die chemische Verbindung Zinksulfid über 185 unterschiedliche Polytype ausbilden kann.

Der strukturelle Status unterschiedlicher ZnS-Leuchtstoffe hängt von der konkreten Zusammensetzung der Materialien sowie von den Herstellungsbedingungen ab (vergl.: GOBRECHT, H.; NELKOWSKI, H.; ALBRECHT, P.: Zur Kristallstruktur der Zinksulfide. In: Z. Naturforsch., Bd. 16a, 1961, Nr. 9, S. 857-860. - ISSN 0932-0784; WITHNALL, R. et al.: Structure and Morphology of ACEL ZnS:Cu,Cl Phosphor Powder Etched by Hydrochloric Acid. In: J. Electrochem. Soc., Bd. 156, 2009, Nr. 11, S. J326-J332. - ISSN: 0013-4651 und IRELAND, T. G.; SILVER, J.: Studies on the Orientations of ACEL ZnS:Cu Particles in Applied AC Fields. In: ECS Journal of Solid State Science and Technology, Bd. 3, 2014, S. R25-R32. - ISSN 2162-8769). Neben reinphasigen kubischen bzw. eher selten anzutreffenden reinphasig hexagonalen zinksulfidischen Leuchtstoffpulvern können unter Ausnutzung der verschiedenen Einflussfaktoren auch ZnS-Luminophore synthetisiert werden, die unterschiedliche kubisch-hexagonale Phasenanteile aufweisen. Die exakte Bestimmung dieser Phasenanteile kann mit der Hilfe geeigneter Röntgendiffraktometer (X-Ray Diffractionmeter, XRD) durchgeführt werden.

Als optische Strahlung wird derjenige Wellenlängenbereich der elektromagnetischen Strahlung bezeichnet, der zwischen dem der Röntgenstrahlung und dem der Mikrowellen angeordnet ist. Er umfasst somit den Bereich der UV-Strahlung, den des sichtbaren Lichtes und den der Infrarot-Strahlung, und somit den Wellenlängenbereich zwischen 100 nm und 106 nm (1 mm).

Die ultraviolette (UV)-Strahlung betrifft den Wellenlängenbereich von 100 nm bis 380 nm. Dabei wird üblicherweise zwischen der sogenannten UV-A-Strahlung (380 nm bis 315 nm), der UV-B-Strahlung (315 nm bis 280 nm) sowie der UV-C-Strahlung (280 nm bis 100 nm) unterschieden.

Sichtbares Licht (VIS) ist derjenige Ausschnitt des elektromagnetischen Spektrums, der vom menschlichen Auge wahrgenommen werden kann. Für den Normalbeobachter umfasst dieser Bereich die Wellenlängen zwischen 380 nm und 780 nm.

Für die Unterteilung des von 780 nm bis 106 nm (1 mm) reichenden Wellenlängenbereiches der Infrarot (IR)-Strahlung gibt es in der Fachliteratur unterschiedliche Ansätze. In der Regel wird zwischen nahem Infrarot (NIR) (780 nm bis 3.000 nm), mittlerem (3.000 nm bis 50 $\mu$m) und fernem IR (50 $\mu$m bis 1 mm) unterschieden, wobei der NIR-Bereich oftmals noch in den IR-A- (780 nm bis 1.400 nm) und den IR-B-Bereich (1.400 nm bis 3.000 nm) aufgeteilt wird.

Ein Emissionsspektrum beschreibt die spektrale Intensitätsverteilung der von den Leuchtstoffen bei fester Anregungswellenlänge emittierten elektromagnetischen Strahlung. Ein solches Emissionsspektrum kann aus Emissionslinien und/oder Emissionsbanden bestehen.

Ein Anregungsspektrum veranschaulicht die Abhängigkeit der Intensität der von einem Leuchtstoff bei einer festen Wellenlänge emittierten Strahlung von der Wellenlänge der Anregungsstrahlung. Dabei wird die gemessene Intensität sowohl vom Wirkungsgrad für die Absorption der Anregungsstrahlung als auch vom Wirkungsgrad der Strahlungsumwandlung beeinflusst.

Als Thermolumineszenz (thermisch stimulierte Lumineszenz, TSL) wird das Auftreten von Lumineszenz-Erscheinungen (Emission sichtbaren Lichtes) bezeichnet, die beim Erhitzen eines Festkörpers auftreten können. Die Zuführung thermischer Energie bewirkt die Befreiung von zuvor nach erfolgter Anregung mit elektromagnetischer oder ionisierender Strahlung in sogenannten Gitterhaftstellen (Traps) eingefangenen und über einen längeren Zeitraum gespeicherten Elektronen und deren strahlende Rückkehr in den Grundzustand. Die graphische Darstellung der Abhängigkeit der Lumineszenzintensität von der ansteigenden Temperatur während des Aufheizprozesses wird als Glowkurve bezeichnet.

Alternativ zur thermischen Aktivierung kann die Freisetzung der von bestimmten Festkörpern in Haftstellen eingefangenen Elektronen auch durch Anregung der Materialien mit einer energetisch adäquaten optischen Strahlung erreicht werden. Die im Ergebnis einer solchen Aktivierung erfolgende Emission von sichtbarem Licht wird in der Fachliteratur als Optisch Stimulierte Lumineszenz (OSL) bezeichnet.

Vor allem in den 1950er bis 1970er Jahren wurden in der Fachliteratur zahlreiche Untersuchungsergebnisse zum Thermolumineszenz-Verhalten zinksulfidischer Leuchtstoffe veröffentlicht (vergl. beispielsweise die Übersichtsarbeiten von HOOGENSTRAATEN, W.: Electron Traps in Zinc-Sulfide Phosphors. In: Philips Res. Repts, Bd. 13, 1958, S. 515-693. - ISSN 0031-7918 und GRASSER, R.; SCHARMANN, A.; WETZEL, G.: Thermolumineszenz von kubischem und hexagonalem ZnS/Cu. In: Z. Naturforsch., Bd. 28a, 1973, Nr. 12, S. 1378-1379. - ISSN 0932-0784). Dabei galt das akademische Interesse der Autoren allerdings vorzugsweise den bei vergleichsweise tiefen Temperaturen (Tmax < 273 K) auftretenden Glowpeaks.

Das erfindungsgemäße Sicherheitsmerkmal ist dafür ausgebildet, in einem Sicherheitsdokument oder in einem Wertdokument als Echtheitskriterium verwendet zu werden. Durch eine Detektion bzw. Verifikation des Sicherheitsmerkmales kann die Echtheit des Sicherheitsdokumentes bzw. des Wertdokuments überprüft werden.

Das Sicherheitsmerkmal umfasst einen pulverförmigen, zinksulfidischen Leuchtstoff, bei dem die Struktur der einzelnen Leuchtstoffpartikel jeweils durch präparativ eingestellte kubische und hexagonale Phasenanteile charakterisiert ist und der neben einer durch elektrische Wechselfelder anregbaren Elektrolumineszenz weitere spezielle Lumineszenzeigenschaften aufweist. In besonderem Maße zeigt dieser Leuchtstoff neben seiner Elektrolumineszenz auch eine sicher detektierbare, exklusive Thermolumineszenz- Charakteristik, was im Weiteren noch detaillierter erläutert wird.

Die Grundidee der Erfindung besteht in der Bereitstellung eines zinksulfidischen Elektroluminophors für die Anwendung in Sicherheitsmerkmalen, der sich zusätzlich zu seiner effizienten, vorwiegend im tief roten Spektralbereich erfolgenden Elektrolumineszenz durch weitere spezielle, nachprüfbare Lumineszenzeigenschaften auszeichnet und zusätzlich zur Elektrolumineszenz insbesondere eine stabil detektierbare und unterscheidbare Thermolumineszenz (TSL) zeigt. Dabei hat sich gezeigt, dass eine wesentliche Voraussetzung für das Auftreten einer ersten Lumineszenzstrahlung, nämlich einer effizienten Elektrolumineszenz im Spektralbereich zwischen 580 nm und 780 nm, und das gleichzeitige Vorhandensein einer von der ersten Lumineszenzstrahlung verschiedenen zweiten Lumineszenzstrahlung, nämlich einer sicher verifizierbaren thermisch oder aber optisch stimulierbaren Lumineszenz, darin besteht, die Synthesebedingungen für die Herstellung des zinksulfidischen Elektroluminophors in Form von Elektrolumineszenz-Pigmenten so auszuwählen und zu optimieren, dass diese Pigmente jeweils sowohl kubische als auch hexagonale Phasenanteile aufweisen. Nur so kann erreicht werden, dass in dem exklusiven ZnS-Elektroluminophor neben den für eine leistungsfähige Elektrolumineszenz erforderlichen Strahlungszentren vergleichsweise tief liegende Haftstellen ausgebildet sind, die in der Lage sind, anregende Strahlungsenergien über einen längeren Zeitraum nachhaltig zu speichern und die nicht vorzeitig durch sogenannte Nachleuchtprozesse entleert werden. Die thermische Stimulierung der in Form von Elektronen in den Haftstellen gespeicherten Energien führt dann zur Generierung messbarer Thermolumineszenz-Signale, wobei die entsprechenden Glowkurven vorzugsweise Temperaturmaxima von Tmax > 100°C aufweisen.

Bei der Untersuchung der für die erfindungsgemäßen Sicherheitsmerkmale geeigneten Leuchtstoffe konnte darüber hinaus experimentell nachgewiesen werden, dass die in den Haftstellen der zinksulfidischen Elektroluminophore gespeicherten Elektronen auch durch die Stimulation mit geeigneter optischer Strahlung wieder in den Grundzustand zurückgeführt werden können. Auf dieser Grundlage ist es möglich, alternativ zur exklusiven Thermolumineszenz, die ebenfalls exklusive Optisch Stimulierbare Lumineszenz (OSL) derselben zinksulfidischen Elektroluminophore als Echtheitskriterium in Sicherheitsmerkmalen anzuwenden.

Durch die Anwendung der benannten Effekte in der Erfindung werden die Exklusivität des erfindungsgemäßen Sicherheitsmerkmales im Vergleich zum Stand der Technik erhöht und dessen Anwendungsmöglichkeit erweitert. Auf der Grundlage der beschriebenen Elektrolumineszenz-Pigmente ist es möglich, das erfindungsgemäße exklusive Sicherheitsmerkmal bereitzustellen, welches zusätzliche und von seiner Level-3-Charakteristik unabhängige weitere sicherheitsrelevante Eigenschaften aufweist, die ebenfalls zur Echtheitsprüfung herangezogen werden können. Die für eine sichere Verifikation dieser Eigenschaften erforderlichen Signale können dabei sowohl forensisch ermittelt als auch maschinell ausgelesen werden.

Der zinksulfidische Leuchtstoff, der im erfindungsgemäßen Sicherheitsmerkmal zur Anwendung kommt, weist die allgemeine Formel:

$$ZnS: Cu_x, M_y, X_z$$

auf. Dabei bezeichnet Cu das chemische Element Kupfer, während das Symbol M für ein oder mehrere Elemente ausgewählt aus einer die chemischen Elemente Cobalt (Co), Indium (In) und Nickel (Ni) umfassenden Gruppe steht. Das Symbol X steht für ein oder mehrere Elemente ausgewählt aus einer die Halogenide Fluor (F), Chlor (CI), Brom (Br) und Iod (I) umfassenden Gruppe. Für die aufgeführten Indizes gelten dabei die folgenden Relationen:

$$0 < x \leq 0,002$$

$$0 < y \leq 0,00015$$

$$0 \leq z \leq 0,00050$$

In einer alternativen Schreibweise kann die oben angegebene allgemeine chemische Formel für den zinksulfidischen Leuchtstoff auch als:

$$(Zn_{1-x-y-d} \, Cu_x \, M_y \, \square \, _d)(S_{1-z-e} \, \square_e \, X_z)$$

angegeben werden, wobei das Symbol $\square$ die zum Zwecke des Ladungsausgleiches während der Synthese des Leuchtstoffes gebildeten Gitterfehlstellen oder Zwischengitterplätze und die zugeordneten Indizes d und e deren jeweilige Anteile kennzeichnen.

In einer bevorzugten Ausführungsform des Sicherheitsmerkmals weist der genutzte zinksulfidische Leuchtstoff die Zusammensetzung:

$$ZnS: Cu_x, Co_y$$

mit

$$\text{mit } 0 < x < 0,002 \text{ und } 0 < y \leq 0,00015 \text{ auf.}$$

auf.

Der beschriebene zinksulfidische Leuchtstoff zeichnet sich durch eine hohe Effizienz der erreichbaren Elektrolumineszenzausbeuten sowie durch gleichfalls hohe Thermolumineszenz- und/oder OSL-Signalstärken aus. Gleichzeitig besitzt er eine hohe Stabilität und Alterungsbeständigkeit gegenüber Umwelteinflüssen. Beide Aspekte sind für die sichere Verifizierbarkeit des auf dem beschriebenen zinksulfidischen Leuchtstoff beruhenden erfindungsgemäßen Sicherheitsmerkmales über den gesamten Lebenszyklus der entsprechenden Sicherheits- oder Wertdokumente von großer Wichtigkeit.

In Abhängigkeit von den präparativen Bedingungen weisen die Partikel des in Form von Leuchtstoffpulver ausgebildeten zinksulfidischen Leuchtstoffes bevorzugt eine mittlere Korngröße zwischen 2 $\mu$m und 50 $\mu$m, besonders bevorzugt zwischen 2 $\mu$m und 20 $\mu$m auf. Auf dieser Grundlage ist es möglich, diese Partikel unter Verwendung der üblichen Drucktechnologien, wie beispielsweise der bekannten Tiefdruck-, Flexodruck-, Offsetdruck- oder Siebdruckverfahren oder aber auch mit der Hilfe andersgearteter Beschichtungs- und Laminierungsmethoden auf und/oder in die Wert- und Sicherheitsdokumente zu applizieren, um das erfindungsgemäße Sicherheitsmerkmal auszubilden. Bei den diesbezüglichen Wert- und Sicherheitsdokumenten kann es sich um Banknoten, Ausweise, Reisepässe und Führerscheine, aber auch beispielsweise um Servicekarten, wie etwa Bank- oder Kreditkarten etc. handeln.

Die Emissionsspektren der mit hoher Intensität bei Anregung mit elektrischen Wechselfeldern lumineszierenden Varianten des beschriebenen zinksulfidischen Leuchtstoffes bestehen bevorzugt jeweils aus nur einer Emissionsbande, deren spektrale Ausdehnung insgesamt den Wellenlängenbereich von 480 nm bis 880 nm und bevorzugt den von 580 bis 780 nm umfasst. Die Intensitätsmaxima dieser vergleichsweise extrem breitbandigen Emissionen liegen bevorzugt im Bereich von 640 nm bis 660 nm. Die Halbwertbreiten der Emissionsbanden betragen bevorzugt zwischen 180 nm und 240 nm.

Die auf die Detektion der exklusiven Elektrolumineszenz zielende Echtheitsprüfung des erfindungsgemäßen Sicherheitsmerkmales kann mit bekannten Verfahren zur Verifizierung elektrolumineszierender Merkmale mit Level-3-Charakteristik erfolgen. Die exklusive, im tief roten Spektralbereich zwischen 580 und 780 nm erfolgende Emission des zinksulfidischen Leuchtstoffes ist dabei auch wegen ihrer guten Übereinstimmung mit der spektralen Empfindlichkeit der üblicherweise zur Detektion eingesetzten Silizium (Si)- Sensoren als vorteilhaft anzusehen. Wie im Stand der Technik beschrieben, kann die Signalstärke der Elektrolumineszenz auch im Falle des erfindungsgemäßen Sicherheitsmerkmales durch die Kombination der EL-Pigmente mit sogenannten Feldverdrängungselementen weiter erhöht werden.

Zusätzlich zu der beschriebenen exklusiven, stationären Elektrolumineszenz zeigt der beschriebene zinksulfidische Leuchtstoff nach vorheriger Anregung charakteristische Lumineszenzerscheinungen, die bei seinem Erhitzen beobachtet und gemessen werden können. Diese spezielle Art der Lumineszenz, die an das Vorhandensein bestimmter Haftstellen in dem jeweiligen Leuchtstoffgrundgitter gebunden ist und auf der Befreiung der in diesen Haftstellen gespeicherten Elektronen bzw. gespeicherten Energien und ihrer Rückführung in den Grundzustand beruht, wird in der Fachliteratur als Thermolumineszenz (TSL) bezeichnet. Die Temperaturabhängigkeit der Intensität des infolge der Zuführung der thermischen Energie emittierten Lichtes kann in der Form sogenannter Glowkurven aufgezeichnet werden.

Die TSL-Glowkurven der verschiedenen Varianten des beschriebenen zinksulfidischen Leuchtstoffes weisen Temperaturmaxima von größer als 100 °C auf, besonders bevorzugt im Bereich von 120 °C bis 150 °C. Sie unterscheiden sich damit deutlich von den ermittelten Glowkurven konventioneller ACPEL-Luminophore, die beispielsweise in Dickschicht-Elektrolumineszenz-Displays eingesetzt werden und für die Temperaturmaxima im Bereich von 30 °C bis 70 °C gemessen wurden. Haftstellen, die für das Auftreten von Glowpeaks im zuletzt genannten Temperaturbereich verantwortlich zeichnen, können vergleichsweise schnell, beispielsweise durch Schwankungen der Raumtemperaturen oder aber infolge anderer Faktoren und Mechanismen entleert werden und geben daher eher Anlass zum Auftreten zeitlich begrenzter, sogenannter Nachleuchtprozesse, für die alternativ in der Literatur auch die Begriffe Afterglow oder aber Phosphoreszenz verwendet werden.

Der beschriebene zinksulfidische Leuchtstoff ist dagegen in der Lage, Teile der Anregungsstrahlung über einen längeren Zeitraum sicher zu speichern, sodass das unter definierten Bedingungen durch das Hinzufügen thermischer Energie erfolgende Auslesen der gespeicherten Information in Form einer reproduzierbaren, exklusiven Glowkurve als ein zusätzliches Echtheitskriterium für die Anwesenheit des erfindungsgemäßen Sicherheitsmerkmales angewendet werden kann.

Das Befüllen der für die exklusive Thermolumineszenz-Charakteristik des beschriebenen zinksulfidischen Leuchtstoffes verantwortlichen Haftstellen erfolgt bevorzugt durch die Anregung mit ultravioletter Strahlung. Die optimale Wellenlänge für die UV-Bestrahlung kann experimentell durch Messung der TSL-Anregungsspektren ermittelt werden. Es wurde gefunden, dass die Wellenlänge der anregenden UV-Strahlung für den beschriebenen zinksulfidischen Leuchtstoff bevorzugt im Bereich von kleiner/gleich 340 nm liegt, um beim Auslesen der Thermolumineszenz möglichst hohe Signalstärken erzielen zu können.

Ein weiterer Befund betrifft das Emissionsspektrum der zweiten Lumineszenzstrahlung, nämlich der thermisch oder aber optisch stimulierten Lumineszenz des Leuchtstoffs im erfindungsgemäßen Sicherheitsmerkmal. Dieses Emissionsspektrum weist im Gegensatz zu der tief roten stationäre Elektrolumineszenz im grünen Spektralbereich positionierte Emissionsbanden mit Maxima im Bereich von 520 nm bis 550 nm auf.

Als ein besonders wichtiges Ergebnis der durchgeführten vielfältigen Untersuchungen ist die Tatsache hervorzuheben, dass es im Rahmen der Erfindung gelang, experimentell nachzuweisen, dass die Verifikation der exklusiven Thermolumineszenz-Signale des erfindungsgemäßen Sicherheitsmerkmales auch an den mit den entsprechend konfigurierten Sicherheitsmerkmalen ausgestatteten Wert- und Sicherheitsdokumenten, wie beispielsweise Banknoten, Ausweisen, Reisepässen und Führerscheinen, oder aber Bank- bzw. Kreditkarten sicher erfolgen kann. Dabei konnte zugleich gezeigt werden, dass alle relevanten, für das Erstellen der jeweiligen Wert- und Sicherheitsdokumente verwendeten Trägermaterialien der für das wiederholte Auslesen der TSL-Signale erforderlichen thermischen Behandlung bis zu Temperaturen von 250 °C unbeschadet standhalten. Es wurden keinerlei Beschädigungen dieser Materialien und der auf und in ihnen platzierten, anders gearteten Designs und Sicherheitsmerkmale festgestellt. Die thermische Beständigkeit der verschiedenen Trägermaterialien in dem für die Thermolumineszenz-Messungen relevanten Temperaturbereich konnte darüber hinaus auch mit der Hilfe thermoanalytischer Untersuchungsmethoden nachgewiesen werden.

Darüber hinaus ergaben die Untersuchungen an üblicherweise verwendeten Banknotensubstraten, die zu Untersuchungszwecken mit erfindungsgemäßen Sicherheitsmerkmalen beschichtet wurden, dass beim wiederholten Befüllen und Auslesen der für die exklusive Thermolumineszenz der Merkmale verantwortlichen Haftstellen Glowkurven gemessen werden können, die sich durch ausreichend hohe Lumineszenzintensitäten auszeichnen und sich in Bezug auf die Kurvenform und die charakteristischen $T_{max}$-Werte nicht von den an Pulverproben des beschriebenen Leuchtstoffes gemessenen Kurven unterscheiden.

Für das reproduzierbare Aufzeichnen der charakteristischen Glowkurven ist es zudem empfehlenswert, wenngleich nicht zwingend erforderlich, die in dem Leuchtstoff im Zuge seiner Anwendung zufällig, beispielsweise durch Tageslicht-Anregung gespeicherten Energien vor Beginn der Messung zunächst durch gezieltes Ausheizen zu entfernen. Anschließend erfolgt eine erneute Anregung unter definierten Bedingungen.

Die mit den beschriebenen Lumineszenzeffekten verbundene Entleerung der speziellen Haftstellen des beschriebenen zinksulfidischen Leuchtstoffes kann auch ohne das Hinzufügen thermischer Energie durch gezielte optische Stimulierung (OSL) erfolgen. Dabei sollte die optische Stimulation mit der Hilfe geeigneter Laser erfolgen, um genügend hohe und sicher detektierbare Signalstärken zu erzielen. Die für die effiziente optische Stimulation der eingefangenen Ladungsträger erforderlichen Stimulationswellenlängen können experimentell ermittelt werden.

Im Unterschied zu den für die Thermolumineszenz typischen Glowkurven werden für die Optisch Stimulierte Lumineszenz in aller Regel charakteristische Abklingkurven gemessen und als Authentifizierungsmerkmal aufgezeichnet. Wie die in diesem Zusammenhang durchgeführten Untersuchungen ergaben, kann ein besonders günstiges Signal-Rausch-Verhältnis bei der optischen Stimulierung der nach erfolgter 340 nm-Anregung durch den zinksulfidischen Leuchtstoff gespeicherten Energien beispielsweise dann erzielt werden, wenn die Stimulationswellenlänge des Lasers etwa 750 nm beträgt.

Da das Emissionsmaximum der optisch stimulierten Lumineszenz des beschriebenen zinksulfidischen Leuchtstoffes, wie im Falle seiner Thermolumineszenz, im grünen Spektralbereich zwischen 520 nm und 550 nm liegt, kann diese Art der Strahlungsumwandlung auch als Anti-Stokes-Lumineszenz angesehen werden.

Insbesondere der zusätzliche Einbau von Cobaltionen in die ZnS:Cu-Matrix führt zu einer Erhöhung der Effizienz der unterschiedlichen charakteristischen Lumineszenzprozesse des Leuchtstoffes, zur Stabilisierung der im tief roten Spektralbereich erfolgenden Elektrolumineszenz sowie zu einer sicheren Positionierung der Temperaturmaxima der Thermolumineszenz-Glowkurven im angestrebten Bereich zwischen 120°C und 150 °C.

Die auf der Speicherung der Anregungsenergien beruhenden exklusiven TSL- bzw. OSL-Charakteristika des zinksulfidischen Leuchtstoffes können als zusätzliche Echtheitskriterien für die Authentifizierung von Wert- und Sicherheitsdokumenten verwendet werden. Dies bedeutet, dass sie beispielsweise auch anstelle des Hochsicherheitsmerkmals "Elektrolumineszenz" zur Echtheitsverifizierung herangezogen werden können, und zwar insbesondere dann, wenn technische Umstände, Umweltvorschriften oder aber Sicherheitsvorschriften es nicht zulassen, die zum Nachweis der exklusiven Elektrolumineszenz des erfindungsgemäßen Sicherheitsmerkmales erforderliche Anregung der Elektrolumineszenz-Pigmente mit hochfrequenten elektrischen Hochspannungswechselfeldern zu realisieren.

Ebenso ist es möglich, die zusätzlichen exklusiven TSL- oder OSL-Merkmale beim Ausfall oder bei der Blockierung der für die Detektion der Elektrolumineszenz erforderlichen Energieübertragungsmechanismen oder aber im Falle vermuteter Fälschungen zur Bewertung der Echtheit der entsprechenden Wert- und Sicherheitsdokumente in Anwendung zu bringen.

Dabei kann die Anwesenheitsprüfung der Merkmale sowohl forensisch unter Verwendung entsprechender technischer Hilfsmittel im Labor oder aber auch maschinell, beispielsweise mit der Hilfe entsprechend konfigurierter Banknotenprüfgeräte erfolgen.

Es wurde bereits darauf hingewiesen, dass eine entscheidende Voraussetzung für die Manifestierung der exklusiven Leuchtstoffeigenschaften des erfindungsgemäßen Sicherheitsmerkmales darin besteht, dass die synthetisierten Leuchtstoffpartikel jeweils sowohl kubische als auch hexagonale Phasenanteile aufweisen.

Dabei sind die unterschiedlichen Phasenanteile des unter speziellen Präparationsbedingungen gewonnenen zinksulfidischen Leuchtstoffes offenbar im Sinne des Auftretens möglicher Auf- oder Verwachsungsprozess strukturell miteinander verbunden, was daraus geschlussfolgert werden kann, dass die entsprechend konfigurierten Leuchtstoffpartikel, anders als im Falle der mechanischen Vermengung von beispielsweise reinphasig kubischen und reinphasig hexagonalen kupferaktivierten ZnS- Partikeln, durch einheitliche Lumineszenz-Charakteristika gekennzeichnet sind. Umfangreiche Untersuchungen zu den Zusammenhängen zwischen dem mit der Hilfe röntgendiffraktometrischer Methoden ermittelten strukturellen Status der Leuchtstoffproben und den Leuchtstoffeigenschaften haben ergeben, dass sowohl die Emissionsspektren der Elektrolumineszenz der Luminophore als auch die Lage der Temperaturmaxima der exklusiven TSL-Glowkurven sowie die charakteristische Form der Abklingkurven der Optisch Stimulierten Lumineszenz in beträchtlichem Maße von der Ausprägung der hexagonalen Phasenanteile abhängen. In diesem Zusammenhang konnte ermittelt werden, dass die relativen hexagonalen Phasenanteile in den einzelnen Partikeln des zinksulfidischen Leuchtstoffes bevorzugt durchschnittlich größer als 10 %, weiter bevorzugt durchschnittlich größer als 20 % und besonders bevorzugt durchschnittlich im Bereich zwischen 20 % und 40 % liegen, um abzusichern, dass diese Partikel eine im tief roten Spektralbereich erfolgende Elektrolumineszenz und zugleich unterscheidbare exklusive Thermolumineszenz-Glowkurven mit Temperaturmaxima im Bereich von 120 °C bis 150 °C aufweisen.

Für die Herstellung des beschriebenen zinksulfidischen Leuchtstoffes werden zunächst die aus dem Stand der Technik bekannten mehrstufigen Syntheseverfahren zur Anwendung gebracht. Um die als Voraussetzung für die Realisierung der angestrebten exklusiven Lumineszenzeigenschaften anzusehende kubisch-hexagonale Phasenstruktur der ZnS-Leuchtstoffpartikel präparativ einstellen zu können, müssen die Präparationsbedingungen allerdings in spezieller Weise konfiguriert werden. Dabei hat sich gezeigt, dass für die Ausbildung dieser speziellen Kristallstruktur von allem die thermischen Prozesse der Herstellungsverfahren von Bedeutung sind. Diese betreffen vorrangig den Hochtemperaturglühprozess und die Gestaltung des nachfolgenden Abkühlregimes sowie die im Zuge der Aufarbeitung des gewonnenen Glühgutes zumeist zusätzlich ausgeführten Temperschritte.

Da die Temperatur für die Phasenumwandlung der kubischen Sphalerit- bzw. Zinkblende-Struktur in die hexagonale Wurzit- Struktur des Zinksulfides laut Literaturangeben bei etwa 1.020 °C liegt, muss die Hochtemperaturglühung der in speziellen Tiegeln in entsprechenden Glühöfen positionierten Gemenge der Ausgangstoffe für die Leuchtstoffsynthese in jedem Falle deutlich oberhalb dieser Temperatur erfolgen, um den vollständigen Umsatz der Ausgangsstoffe und somit zunächst die vollständige Ausbildung hexagonaler zinksulfidische Leuchtstoffpartikel zu ermöglichen.

Ein langsames Abkühlen des Glühgutes würde die Rückverwandlung der bei den hohen Temperaturen ausgebildeten hexagonalen ZnS-Pigmente in die thermodynamisch vorbestimmte kubische Kristallstruktur befördern. Nur durch ein schnelles Abkühlen kann dagegen erreicht werden, dass die hexagonale strukturelle Disposition der Kristallite zumindest anteilig erhalten bleibt.

Es hat sich gezeigt, dass zur Realisierung der exklusiven Lumineszenzeigenschaften des für das erfindungsgemäße Sicherheitsmerkmal nutzbaren zinksulfidischen Leuchtstoffes Glühtemperaturen im Bereich zwischen 1.100 °C und 1.300 °C, bevorzugt oberhalb von 1.200 °C erforderlich sind.

Um sicherzustellen, dass durch ein schnelles Abkühlen der synthetisierten Leuchtstoffteilchen nach Beendigung des Abkühlprozesses noch hexagonale Strukturanteile von bevorzugt 20 % bis 40 % erhalten bleiben, ist es hilfreich, den Abkühlprozess zu optimieren und Maßnahmen zur Realisierung der erforderlichen Abkühlgeschwindigkeit festzulegen. Dabei hängt die optimale Konstellation zwischen der Glühtemperatur und dem Abkühlregime von zahlreichen Faktoren ab. Zu diesen Faktoren gehören beispielsweise die Art der für die Synthese der zinksulfidischen Leuchtstoffe verwendeten Ausgangsstoffe, die Art der Ansatzbereitung, aber auch weitere technologische Aspekte wie etwa die Ofengeometrie, die Ofenatmosphäre, die Tiegelart, die Tiegelgröße etc. Der Fachmann ist jedoch in der Lage, unter Beachtung der technischen Gegebenheiten sowie auf der Grundlage der durchgeführten Optimierungsversuche das Abkühlregime so einzustellen, dass die synthetisierten Leuchtstoffteilchen schlussendlich die gewünschten hexagonalen Phasenanteile aufweisen.

Es sei an dieser Stelle auch darauf hingewiesen, dass es in Bezug auf die beschriebenen Zusammenhänge große Unterschiede zwischen der Synthese relevanter Leuchtstoffproben im Labormaßstab und der unter industriellen Bedingungen erfolgenden Herstellung entsprechender Fertigungschargen gibt. Die für die Optimierung der Glüh-und Abkühlprozesse erforderlich Bestimmung der jeweils resultierenden kubisch-hexagonalen Phasenanteile der Glühprodukte kann, wie bereits erwähnt, mit der Hilfe röntgendiffraktometrischer Messungen durchgeführt werden.

Grundsätzlich müssen in die spezielle Konfigurierung der zur Herstellung des Leuchtstoffes in Anwendung gebrachten thermischen Prozese auch die in aller Regel ausgeführten Temperschritte mit einbezogen werden.

Das abermalige Tempern der aufgearbeiteten Glühprodukte erfolgt zumeist in zwei getrennten Schritten bei Temperaturen, die deutlich unterhalb der für die kubisch-hexagonale Phasenumwandlung des Zinksulfides charakteristischen Temperatur liegen. Sie werden durchgeführt, um die bei der Nachbehandlung der gewonnenen Glühprodukte infolge der mechanischen (Vermahl- und Siebprozess) und chemischen (Ätzprozesse unter Verwendung von Mineralsäuren wie HCI und HNO3) Beanspruchung des synthetisierten Leuchtstoffes im Allgemeinen unkontrolliert entstehenden Gitterdefekte partiell auszuheilen, um so die Effizienz der resultierenden Lumineszenzprozesse verbessern zu können.

Dabei ist allerdings zu berücksichtigen, dass eine längere thermische Behandlung beispielsweise bei Temperaturen zwischen 200 °C und 900 °C im Falle des unter speziellen Bedingungen synthetisierten zinksulfidischen Leuchtstoffes nachgewiesenermaßen zu einer Rückumwandlung der absichtlich erzeugten hexagonalen Strukturanteile zugunsten der Ausprägung einer bevorzugt kubischen Kristallsymmetrie der Leuchtstoffpartikel führt.

Bei dem erfindungsgemäßen Sicherheits- und/oder Wertdokument kann es sich beispielsweise um eine Banknote oder um einen Reisepass, einen Personalausweis, einen Führerschein, eine Briefmarke, Steuerbanderole oder aber auch um Servicekarten wie Bank- oder Kreditkarten handeln. Das Sicherheits- und/oder Wertdokument weist das erfindungsgemäße Sicherheitsmerkmal auf. Bevorzugt weist das Sicherheits- und/oder Wertdokument eine oder mehrere Ausführungsformen des erfindungsgemäßen Sicherheitsmerkmales auf. Das Sicherheitsmerkmal kann auf unterschiedliche Weise auf oder in das Sicherheits- und/oder Wertdokument auf- bzw. eingebracht sein. Bevorzugt ist das Sicherheitsmerkmal mit Hilfe einer Drucktechnologie, beispielsweise einem Tiefdruck-, Offsetdruck- oder Siebdruckverfahren oder aber auch mit Hilfe von Beschichtungs- und Laminierungsmethoden in das und/oder auf das Sicherheitsdokument bzw. Wertdokument appliziert. Das Sicherheits- und/oder Wertdokument weist im Übrigen bevorzugt auch Merkmale auf, die im Zusammenhang mit dem erfindungsgemäßen Sicherheitsmerkmal beschrieben sind.

Im erfindungsgemäßen Sicherheits- bzw. Wertdokument sind in bevorzugter Weise neben dem erfindungsgemäßen Sicherheitsmerkmal weiterhin zusätzlich Feldverdrängungselemente angeordnet. Die Feldverdrängungselemente sind elektrisch leitfähig und innerhalb des Sicherheits- bzw. Wertdokumentes elektrisch isoliert. Sie weisen eine hohe Dielektrizitätskonstante auf. Sie sind bevorzugt in unmittelbarer Nähe zu den zinksulfidischen Leuchtstoffpartikeln angeordnet. Die Feldverdrängungselemente bestehen bevorzugt aus metallischen Partikeln, wie Eisen (Fe), Kupfer (Cu), Aluminium (AI) und/oder Silber (Ag) oder aber auch transparenten, optisch variablen Mehrschicht-Effektpigmenten. Die Feldverdrängungselemente dienen der Erhöhung der an dem zinksulfidischen Leuchtstoff wirksamen lokalen Feldstärke des elektrischen Feldes.

Bevorzugt weist das Sicherheitsmerkmal eine hohe Verarbeitungsstabilität sowie eine hohe Alterungsbeständigkeit gegenüber Umwelteinflüssen auf. Die Stabilität und die Alterungsbeständigkeit sind erforderlich, um eine sichere Verifizierbarkeit des Sicherheitsmerkmals über den gesamten Lebenszyklus des Sicherheitsdokuments zu gewährleisten.

Einen weiteren Gegenstand der Erfindung bildet ein Verfahren zur Detektion und/oder Verifikation des erfindungsgemäßen Sicherheitsmerkmales in einem Sicherheits- oder Wertdokument. Das Verfahren ist bevorzugt zur Detektion und/oder Verifikation einer der beschriebenen Ausführungsformen des erfindungsgemäßen Sicherheitsmerkmales ausgebildet.

Dabei betrifft ein erster Abschnitt des Verfahrens die Detektion der charakteristischen Elektrolumineszenz des zur Ausbildung des erfindungsgemäßen Sicherheitsmerkmals verwendeten zinksulfidischen Elektroluminophors. Dazu wird in einem ersten Schritt das auf/oder in einem Sicherheits- oder Wertdokument platzierte Sicherheitsmerkmal durch ein elektrisches Wechselfeld, bevorzugt durch ein hochfrequentes Hochspannungswechselfeld, das beispielsweise eine Wechselspannung von 30 kV und eine Frequenz von 30 kHz aufweist, angeregt. Unter Verwendung geeigneter optischer Sensoren wird in einem zweiten Verfahrensschritt geprüft, ob eine Elektrolumineszenz des Sicherheitsmerkmals auftritt und ob diese Elektrolumineszenz durch eine erste Lumineszenzstrahlung im tief roten Spektralbereich zwischen 580 und 780 nm gekennzeichnet ist. Diese Prüfung kann durch die direkte Messung des Emissionsspektrums des Leuchtstoffes oder aber durch die Verifikation von auf der Grundlage dieses Spektrums berechenbarer Echtheitsparameter erfolgen. Durch die Verwendung eines mit einer hohen Frequenz ausgestatteten elektrischen Wechselfeldes als Anregungsquelle für die Elektrolumineszenz wird zugleich die Möglichkeit geschaffen, die für die Echtheitsbewertung erforderlichen Lumineszenzsignale in vorteilhaften Weise bei hohen Auslesegeschwindigkeiten zu detektieren.

Ein zweiter Abschnitt des erfindungsgemäßen Verfahrens betrifft die Verifikation der charakteristischen Thermolumineszenz (TSL) bzw. der charakteristischen Optisch Stimulierten Lumineszenz (OSL) des Sicherheitsmerkmals. Dazu werden in einem ersten Schritt dieses zweiten Abschnitts die für die Thermolumineszenz bzw. Optisch Stimulierte Lumineszenz verantwortlichen Haftstellen durch die Anregung mit einer UV- Strahlung ausgewählter Wellenlänge, bevorzugt im Bereich ≤ 340 nm, befüllt. In einem zweiten Schritt dieses Abschnitts erfolgt das Auslesen der in den Haftstellen gespeicherten Energien durch thermische oder optische Stimulation.

Bei einer Ausführungsform des Verfahrens, welche die thermische Stimulation anwendet, erfolgt diese durch gezieltes Aufheizen des Sicherheitsmerkmals, vorzugsweise bis zu einer Temperatur von maximal 250 °C. In einem dritten Schritt erfolgt die Prüfung, ob infolge der thermischen Stimulation eine zweite Lumineszenzstrahlung emittiert wird.

Im Falle der thermischen Stimulation kann zum Zwecke der Echtheitsverifikation die für das Merkmal charakteristische TSL-Glowkurve des Leuchtstoffes mit Temperatur-Maxima von größer als 100 °C und besonders bevorzugt im Bereich von 120 °C bis 150 °C aufgezeichnet werden. Diese Glowkurve kennzeichnet die Abhängigkeit der integralen Intensitäten der ausgelesenen Thermolumineszenz-Signale von der Ausheiztemperatur.

Eine weitere Erhöhung der Detektionssicherheit kann dadurch erreicht werden, dass parallel oder zusätzlich zur Messung der Glowkurve auch das Emissionsspektrum der Thermolumineszenz in die Echtheitsbewertung des Sicherheitsmerkmals einbezogen wird. Bevorzugt weist dieses Emissionsspektrum, also das der zweiten Lumineszenzstrahlung, eine im grünen Spektralbereich zwischen 520 nm und 550 nm positionierte Emissionsbande auf.

Gemäß einer abgewandelten Ausführungsform des Verfahrens zur Detektion und/oder Verifikation des Sicherheitsmerkmals wird alternativ zur Thermolumineszenz die Optisch Stimulierte Lumineszenz (OSL)gemessen und bewertet. Auch in dieser Ausführungsform werden in einem ersten Schritt des zweiten Verfahrensabschnitts die Gitterhaftstellen des Leuchtstoffes zunächst vorzugsweise durch die Anregung mit der Hilfe einer UV-B-Strahlung von kleiner/gleich 340 nm befüllt, die anschließende, den zweiten Schritt bildende Entleerung der Haftstellen erfolgt dann aber im Unterschied zur Thermolumineszenz nicht durch thermische sondern durch eine gezielte optische Stimulierung des Leuchtstoffs. Untersuchungen ergaben, dass ein besonders günstiges Signal-Rausch-Verhältnis bei diesbezüglicher Echtheitsverifikation insbesondere dann erreicht werden kann, wenn die Stimulationswellenlänge des zum Zwecke der optischen Stimulierung zum Einsatz kommenden Lasers etwa 750 nm beträgt.

Im Gegensatz zu den für die Thermolumineszenz typischen Glowkurven liefert die Optisch Stimulierte Lumineszenz gemäß des dritten Schrittes dieses Verfahrensabschnittes eine charakteristische Abklingkurve als Authentifizierungsmerkmal. Die spektrale Verteilung der nach der optischen Stimulierung emittierten Strahlung entspricht aber derjenigen, die auch für das Emissionsspektrum der Thermolumineszenz charakteristisch ist.

Zur Sicherung einer hohen Reproduzierbarkeit bei der Detektion der auf den beschriebenen Speicherprozessen beruhenden Lumineszenz-Charakteristika, also sowohl der Thermolumineszenz als auch der Optisch Stimulierten Lumineszenz, ist es vorteilhaft, das Sicherheitsmerkmal, welches den zinksulfidischen Leuchtstoff umfasst, vor Beginn der Anregungs- und Prüfschritte zunächst bis auf etwa 250 °C zu erhitzen, um auf diese Weise zufällig, beispielsweise durch eine entsprechende Tageslichtanregung, in den Haftstellen gespeicherte Energien zu entfernen.

Weiterhin ist es vorteilhaft, zwischen der erfolgten UV-Anregung und dem Beginn der thermischen bzw. optischen Stimulierung der in den Haftstellen gespeicherten Energien bzw. Ladungsträger eine Pause von einigen Sekunden einzuhalten, um auf diese Weise das Abklingen von möglicherweise auftretenden Phosphoreszenz-Prozessen zu ermöglichen.

Die beschriebenen unterschiedlichen Abschnitte des Detektionsverfahrens können aufeinanderfolgend, oder alternativ zueinander ausgeführt werden, d.h. es kann zunächst das Auftreten der ersten Lumineszenzstrahlung und dann das Auftreten der zweiten Lumineszenzstrahlung geprüft werden. Ebenso können die benannten Verfahrensabschnitte zeitlich und räumlich voneinander getrennt ausgeführt werden.

Dabei besitzt der Verfahrensabschnitt zur Verifikation der Elektrolumineszenz (erste Lumineszenzstrahlung) den Vorteil, dass er auch als Verfahren zur Hochgeschwindigkeitsdetektion von Sicherheitsmerkmalen ausgeführt und damit, beispielsweise, auch in entsprechenden Banknotensortieranlagen eingesetzt werden kann.

Die alternativ auszuführenden Verfahrensabschnitte zur Detektion der TSL- oder OSL-Charakteristika werden dagegen insbesondere dann in Anwendung gebracht, wenn technische Umstände, Umweltvorschriften oder aber Sicherheitsvorschriften die Prüfung der Elektrolumineszenz der Sicherheitsmerkmale mit hochfrequenten elektrischen Hochspannungswechselfeldern nicht zulassen.

Die zusätzliche Prüfung einer auftretenden zweiten Lumineszenzstrahlung, die auf der Speicherfunktionalität des im erfindungsgemäßen Sicherheitsmerkmal eingesetzten Leuchtstoffes beruht, führt zu einer weiteren Erhöhung der Fälschungssicherheit der entsprechenden Wert- und Sicherheitsdokumente. Dadurch ist es möglich, die Echtheit dieser Dokumente auch im Falle von fragwürdigen bzw. nicht eindeutigen Ergebnissen bei der Detektion der Elektrolumineszenz oder aber im Falle vermuteter Fälschungen nachzuweisen.

Dabei kann die Verifikation der TSL-Signale sowohl forensisch im Labor oder aber auch, trotz des mit dem erforderlichen Ausheizen der Merkmale in Zusammenhang stehenden Zeitaufwandes maschinell, beispielsweise mit der Hilfe entsprechend konfigurierter Banknotenprüfgeräte erfolgen.

Für die Optisch Stimulierte Lumineszenz ist die Maschinenlesbarkeit ohnehin gegeben, weil die für die Messung der OSL-Signale erforderlichen Prozesse mit deutlich höherer Geschwindigkeit ablaufen.

Weitere Einzelheiten, Vorteile und spezielle Ausprägungen der Erfindung werden im Folgenden anhand bevorzugter Ausführungsformen der Erfindung unter Bezugnahme auf die Zeichnung näher erläutert. Es zeigen:

Fig. 1    ein Röntgenbeugungsdiagramm eines, im Weiteren auch als Referenzleuchtstoff bezeichneten, zinksulfidischen Leuchtstoffes;

Fig. 2    Elektrolumineszenz-Emissionsspektren ausgewählter, ausschließlich mit Kupfer aktivierter zinksulfidischer Leuchtstoffe;

Fig. 3    Elektrolumineszenz-Emissionsspektren von zusätzlich mit Cobalt dotierten erfindungsgemäßen Ausführungsformen des zinksulfidischen Leuchtstoffes;

Fig. 4    Thermolumineszenz-Glowkurven des zinksulfidischen Referenzleuchtstoffes und eines, diesen Leuchtstoff umfassenden Sicherheitsmerkmals;

Fig. 5    TSL-Glowkurven von ausgewählten Varianten des zinksulfidischen Leuchtstoffes mit unterschiedlichen hexagonalen Phasenanteilen;

Fig. 6    einen Zusammenhang zwischen den Temperaturmaxima der in Fig. 5 gezeigten TSL-Glowkurven und den hexagonalen Phasenanteilen der verschiedenen Varianten des zinksulfidischen Leuchtstoffes;

Fig. 7    ein Thermolumineszenz-Emissionsspektrum eines Sicherheitsmerkmales;

Fig. 8    die TSL-Glowkurve des zinksulfidischen Referenzleuchtstoffes im Vergleich zu TSL-Glowkurven von Elektrolumineszenz-Leuchtstoffen gemäß dem Stand der Technik;

Fig. 9    eine charakteristische Abklingkurve für eine Optisch Stimulierte Lumineszenz eines Sicherheitsmerkmales; und

Fig. 10    eine schematische Darstellung einer optischen Anordnung zur Messung der in den Fig. 4 bis Fig. 9 gezeigten Spektren und Kurven.

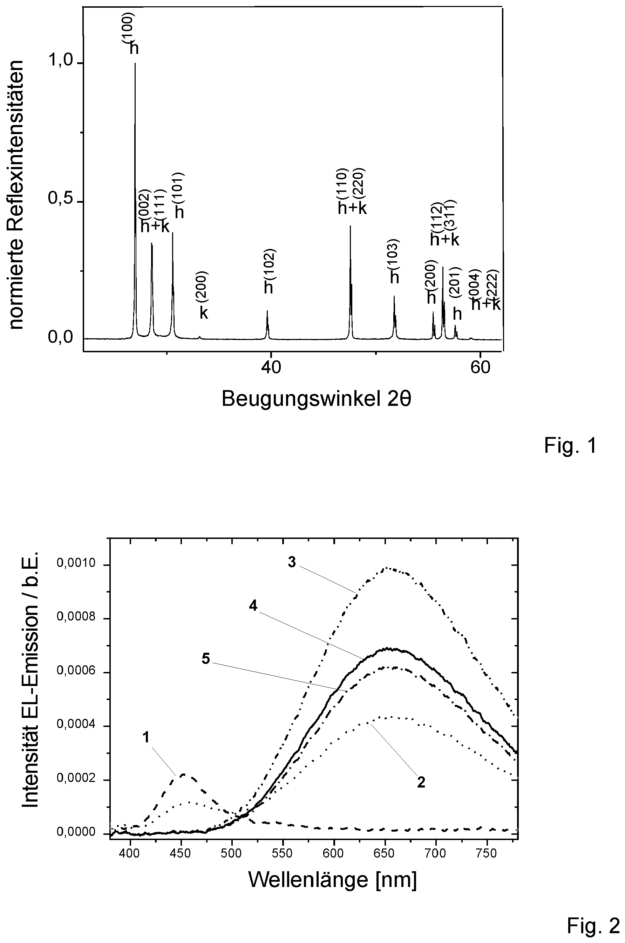

Fig. 1 zeigt ein Röntgenbeugungsdiagramm eines zinksulfidischen Leuchtstoffes (Referenzleuchtstoff) eines Sicherheitsmerkmales. Hierbei handelt es sich bei dem genutzten Referenzleuchtstoff um einen ausschließlich mit Kupfer aktivierten zinksulfidischen Leuchtstoff. Nachfolgend ist die Synthese dieses Leuchtstoffes mit der angestrebten Zusammensetzung $ZnS:Cu_{0,0005}$ beispielhaft erläutert.

Zur Herstellung des Leuchtstoffes werden 399,3 g eines hochreinen pulverförmigen Zinksulfides intensiv mit 0,25 g von zuvor vermahlenen $CuSO_4$ vermengt und zur weiteren Verbesserung der Homogenität der Mischung über ein 100 $\mu$m Sieb gesiebt. Anschließend wird das Ansatzgemisch in einen Korundtiegel überführt und in einem Kammerofen mit einer Rate von 15 K/min auf 1.200 °C aufgeheizt. Nach dreistündiger Hochtemperaturglühung in einer Formiergas-Atmosphäre mit einem Wasserstoffanteil von 5 % wird der Ofen innerhalb von 90 min auf 600 °C abgekühlt. Das Glühgut wird entnommen und an der Luft auf Raumtemperatur abgekühlt. Es schließen sich eine Nassvermahlung, ein Ätzschritt mit verdünnter Salpetersäure und ein einmaliger Waschprozess an. Danach werden die erhaltenen Feststoffe mittels Filtration abgetrennt und zum Zwecke der Nachdotierung erneut mit 4 ml einer Kupfersulfat-Lösung (16 g $CuSO_4$ pro Liter) versetzt. Nach abermaliger intensiver Homogenisierung wird die Materialmischung abschließend bei einer Temperung bei 500 °C für 180 min getempert. Die finalen Aufarbeitungsschritte umfassen eine zur Einstellung der gewünschten Korngrößenverteilung der synthetisierten Leuchtstoffteilchen erforderliche erneute Nassvermahlung sowie die darauf folgenden finalen Wasch-, Trocknungs- und Siebprozesse.

Das mit der Hilfe eines Diffraktometers gemessene Röntgenbeugungsdiagramm des Referenzleuchtstoffes ist in der Fig. 1 dargestellt. Es besteht aus zahlreichen linienhaften Interferenzen, welche jeweils den beiden unterschiedlichen, kubisch und aber hexagonalen Strukturtypen des Zinksulfides zugeordnet werden können. Dabei repräsentieren die mit dem Buchstaben h und den in Klammern gesetzten jeweiligen Millerschen Indizes versehenen Peaks die hexagonale Phase der pulverförmigen Leuchtstoffprobe, während die mit dem Buchstaben k und den in diesem Falle relevanten Millerschen Indizes markierten Reflexe die anteilige kubische Kristallstruktur der Probe abbilden. Überlagerungen von hexagonalen und kubischen Interferenzen wurden durch die Buchstabenkombination h + k gekennzeichnet.

Auf der Grundlage des gemessenen Diffraktogrammes und der darauf aufbauenden quantitativen Phasenanalyse konnten für den strukturellen Status des Referenzleuchtstoffes relative Phasenanteile von 35 % für die hexagonale und 65 % für die kubische Kristallstruktur ermittelt werden.

Die Ausprägung der relativen strukturellen Phasenanteile in dem Leuchtstoff wird neben anderen Faktoren in starkem Maße von den bei der Leuchtstoffherstellung zur Anwendung gebrachten Präparationsbedingungen beeinflusst. Das bedeutet aber auch, dass der entsprechende strukturelle Status der Leuchtstoffproben durch die Änderung bestimmter Syntheseparameter modifiziert werden kann. Dies geht beispielhaft aus der folgenden Tabelle hervor, in der wichtige Daten für die Charakterisierung der Synthesebedingungen sowie der Struktur und Lumineszenzeigenschaften ausgewählter Kupfer dotierter zinksulfidische Leuchtstoffe zusammengestellt sind:

| Leuchtstoff | Hauptglühprozess | | Phasenanteil Hexagonal | Elektrolumineszenz | | Thermolumineszenz | |
|---|---|---|---|---|---|---|---|
| | $T/°C$ | $t_{down}$ / min | % | $\lambda_{max}$ / nm | Int. / % | $T_{max}$ / % | Int. / % |
| Leuchtstoff 1 | 1.100 | 140 | 4 | ≈ 460 | 10 | 40 | 98 |
| Leuchtstoff 2 | 1.100 | 120 | 8 | ≈ 650 | 66 | 78 | 190 |
| Leuchtstoff 3 | 1.200 | 120 | 20 | ≈ 650 | 143 | 120 | 160 |
| Referenzleuchtstoff Leuchtstoff 4 | 1.200 | 90 | 35 | ≈ 650 | 100 | 128 | 100 |
| Leuchtstoff 5 | 1.200 | 40 | 55 | ≈ 650 | 90 | 130 | 45 |

In der vorstehenden Tabelle betreffen die Angaben zu den Elektrolumineszenz- und zu den Thermolumineszenz-Eigenschaften zum einen das Wellenlängenmaximum $\lambda_{max}$ des jeweils entsprechenden EL-Emissionsspektrums und zum anderen das Temperaturmaximum $T_{max}$ der für den jeweiligen Leuchtstoff unter vergleichbaren Bedingungen aufgezeichneten Thermolumineszenz-Glowkurve. Die aufgeführten Daten für die prozentualen Intensitäten beziehen sich auf die entsprechenden, für den Referenzleuchtstoff ermittelten Messwerte, die jeweils auf 100 gesetzt wurden.

Es ist hervorzuheben, dass alle in der Tabelle aufgeführten Leuchtstoffe - abgesehen von den hier spezifisch erläuterten Unterschieden - die gleiche Leuchtstoffzusammensetzung aufweisen und dass sie alle auf der Grundlage des oben beschriebenen Verfahrens unter überwiegend gleichen Herstellungsbedingungen, d. h. gleiche Form der Ansatzzubereitung, gleiche Tiegel- und Ofengeometrie, identische Glühzeit und Glühatmosphäre sowie Vergleichbarkeit aller mechanischen und thermischen Nachbehandlungsschritte, gefertigt wurden. Zur Erlangung der unterschiedlichen Phasenzusammensetzungen wurden hingegen sowohl die Temperaturen des Hauptglühprozesses als auch die Abkühlgeschwindigkeiten variiert.

Wie der Tabelle zu entnehmen ist, wurden die jeweils dreistündigen Hochtemperaturglühungen der Ansatzgemische bei Temperaturen von 1.100 °C bzw. 1.200 °C durchgeführt. Die in der Tabelle angegebenen, charakteristischen Werte für die eingestellten unterschiedlichen Abkühlgeschwindigkeiten $t_{down}$ betreffen die Zeitabstände zwischen der Beendigung des Hauptglühprozesses und dem jeweiligen Erreichen einer Abkühltemperatur von 600 °C.

In Abhängigkeit von den vorgenommenen Variationen der Präparationsbedingungen wurden für die resultierenden zinksulfidischen Leuchtstoffe relative hexagonalen Phasenanteilen im Bereich von 4 % bis 55 % erhalten.

Fig. 2 zeigt die bei der Anregung der in der obigen Tabelle aufgeführten Leuchtstoffproben mit einem elektrischen Wechselfeld resultierenden Emissionsspektren. Das Hochspannungswechselfeld weist eine Anregungsspannung 30 kV und eine Anregungsfrequenz von 30 kHz auf. Aus den Elektrolumineszenz-Emissionsspektren geht hervor, dass diejenigen Leuchtstoffproben, die bei vergleichsweise niedrigen Glühtemperaturen und geringen Abkühlgeschwindigkeiten hergestellt wurden und die aus diesem Grunde vergleichsweise geringe hexagonale Strukturanteile aufweisen, wie im Falle der Leuchtstoffprobe 1 (Emissionsspektrum 1), durch eine ausschließlich blaue Elektrolumineszenz oder aber, wie im Falle der Leuchtstoffprobe 2 (Emissionskurve 2), durch eine zumindest anteilig noch vorhandene blaue Elektrolumineszenz gekennzeichnet sind.

Wie die Emissionskurven 3, 4 und 5 der Fig. 2 zeigen, dominieren ab einem relativen hexagonalen Phasenanteil von etwa 10 % und insbesondere ab einem relativen hexagonalen Phasenanteil von etwa 20 % die für die Ausbildung der erfindungsgemäßen Sicherheitsmerkmale bevorzugten, äußerst breitbandigen Emissionen im tief roten Spektralbereich mit Intensitätsmaxima im Bereich um 650 nm eindeutig. Die Intensitäten der gemessenen Elektrolumineszenzen steigen bis zu einem hexagonalen Phasenanteil von etwa 20 % deutlich an, um danach, bei einer noch stärkeren Ausprägung der hexagonalen Strukturcharakteristika leicht abzunehmen.

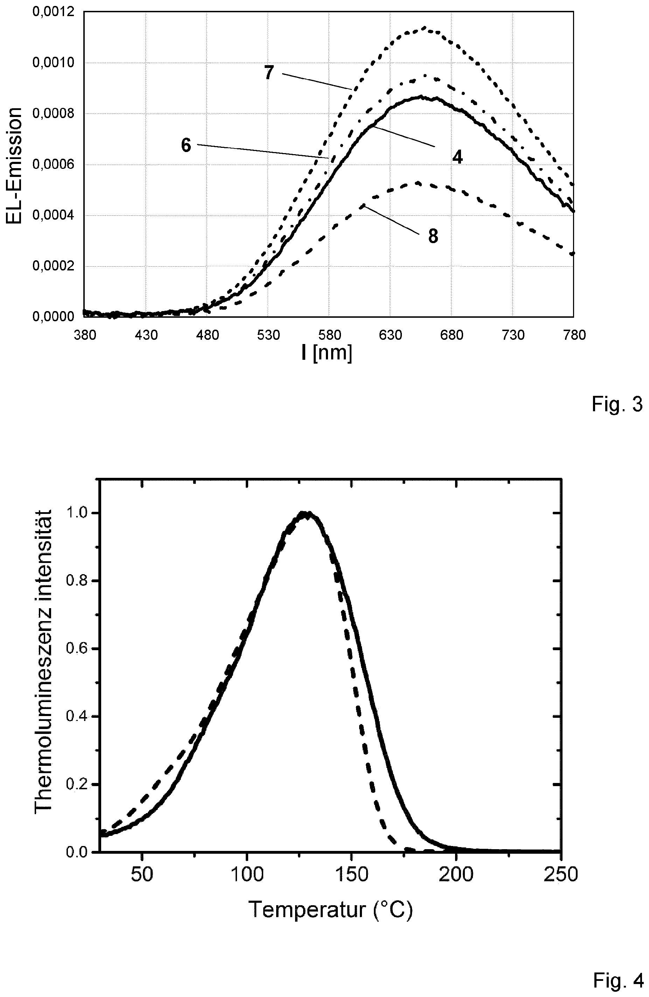

Fig. 3 zeigt Elektrolumineszenz-Emissionsspektren 6 bis 8 von erfindungsgemäßen zinksulfidischen Leuchtstoffen, wobei diese Leuchtstoffe neben der Kupferaktivierung eine zusätzliche Cobalt-Kodotierung aufweisen. Zu Vergleichszwecken wurde in Fig. 3 auch die Emissionskurve 4 des ausschließlich mit Kupfer dotierten Referenzleuchtstoffs mit aufgenommen. Aus der Fig. 3 geht hervor, dass der zusätzliche Einbau von Cobalt-Ionen in die Kupfer-dotierten ZnS-Grundgitter des zinksulfidischen Leuchtstoffes eine Erhöhung der Effizienz der Elektrolumineszenz sowie eine weitere Stabilisierung der speziellen Emissionscharakteristik ermöglicht.

Dabei erfolgte die Herstellung der erfindungsgemäßen kodotierten Leuchtstoffproben (Emissionskurven 6 bis 8) unter den gleichen Bedingungen, wie sie auch für die Synthese des ausschließlich mit Kupfer aktivierten Referenzleuchtstoffes (Emissionskurve 4) zur Anwendung gebracht wurden. Wie im Falle des Referenzleuchtstoffes wurden auch für die molaren Anteile der Kupfer-Aktivatorionen wiederum einheitliche Werte von 500 ppm eingestellt, während für die molaren Anteile der Cobalt-Ionen Werte von 5 ppm (Emissionskurve 6), 10 ppm (Emissionskurve 7) bzw. 20 ppm (Emissionskurve 8) festgelegt wurden.

Fig. 4 zeigt eine Gegenüberstellung der exklusiven Thermolumineszenz-Glowkurven, die für den pulverförmigen Referenzleuchtstoff und ein diesen Referenzleuchtstoff aufweisendes Sicherheitsmerkmal ermittelt wurden, wobei dieses Sicherheitsmerkmal auf einem Banknotensubstrat positioniert wurde. In dieser Gegenüberstellung ist die Thermolumineszenz-Glowkurve des pulverförmigen Referenzleuchtstoffes mit einer durchgezogenen Linie dargestellt, während die Thermolumineszenz-Glowkurve des Sicherheitsmerkmales mit einer gestrichelten Linie dargestellt ist.

In beiden Fällen wurden die zu prüfenden Proben zunächst bis auf 250 °C erhitzt, um auf diese Weise zufällig, gegebenenfalls durch eine entsprechende Tageslichtanregung, gespeicherte Energien entfernen zu können. Diese, auf die Absicherung einer hohen Reproduzierbarkeit der nachfolgenden Standard-TSL-Messungen bzw. OSL-Messungen abzielende primäre Ausheizprozedur wurde bei allen diesbezüglichen Untersuchungen zur Anwendung gebracht.

Nach der erfolgten Abkühlung wurden die so vorbereiteten Proben unter definierten Bedingungen mit der Hilfe eines 340 nm-Lasers angeregt, um eine möglichst vollständige Befüllung der für die Thermolumineszenz der Proben verantwortlichen Haftstellen zu bewirken. Danach wurde in allen Fällen eine Pause von 20 Sekunden eingehalten, um anschließend mit dem Auslesen der gespeicherten Lichtsummen durch das gezielte Aufheizen der Proben mit einer Aufheizgeschwindigkeit von 5 K/s bis zu einer Endtemperatur von 250 °C zu beginnen. Die integralen Intensitäten der infolge der zugeführten thermischen Energie von den Proben emittierten Strahlung konnten mit der Hilfe eines TSL/OSL-Readers der Firma RISØ (Model DA-15) detektiert werden. Die graphische Darstellung ihrer Temperaturabhängigkeit führt zu den in der Fig. 4 gezeigten Kurven.

Es wird deutlich, dass die beiden Kurven praktisch gleiche Temperaturmaxima bei etwa 130 °C aufweisen und dass sie sich auch hinsichtlich der Kurvenform nur geringfügig voneinander unterscheiden. Dies bedeutet, dass die exklusive Thermolumineszenz-Charakteristik des Leuchtstoffes auch dann erhalten bleibt, wenn der Leuchtstoff zu dem Sicherheitsmerkmal verarbeitet wird, insbesondere wenn er auf und/oder in entsprechende Wert- und Sicherheitsdokumente, wie beispielsweise Banknoten, Ausweisen, Reisepässen und Führerscheinen, oder aber auch Bank- oder Kreditkarten, appliziert wird.

Bei den beiden gezeigten Thermolumineszenz-Glowkurven handelt es sich um intensitätsseitig normierte Glowkurven. Die Unterschiede bezüglich der gemessenen Intensitäten sind aber vergleichsweise gering. Bei ansonsten gleichen Messbedingungen hängen die Intensitäten der für ein und denselben Leuchtstoff gemessenen Thermolumineszenz-Signale insbesondere von der Dicke der jeweiligen Leuchtstoffschicht ab.

Bei den in diesem Zusammenhang durchgeführten umfangreichen Untersuchungen konnte darüber hinaus gezeigt werden, dass die exklusiven TSL-Signale ebenso wie ggf. die Signale für die optisch stimulierte Lumineszenz des Leuchtstoffes des erfindungsgemäßen Sicherheitsmerkmales auch im Falle derjenigen Feststoffkonzentrationen sicher verifiziert werden können, die für Pigment beinhaltende Sicherheitsfarben und den unter Verwendung dieser Farben gewonnenen Druckdesigns als typisch anzusehen sind.

Gleichfalls sei an dieser Stelle noch einmal darauf verwiesen, dass bei diesen Untersuchungen auch sichergestellt werden konnte, dass alle üblicherweise für das Erstellen von Wert- und Sicherheitsdokumenten verwendeten Trägermaterialien eine genügend hohe Stabilität aufweisen, um der für das wiederholte Auslesen der Thermolumineszenz-Signale erforderlichen thermischen Behandlung bis zu Temperaturen von 250 °C ohne Beschädigung dieser Materialien und der auf und in ihnen platzierten Sicherheitsmerkmale standzuhalten.

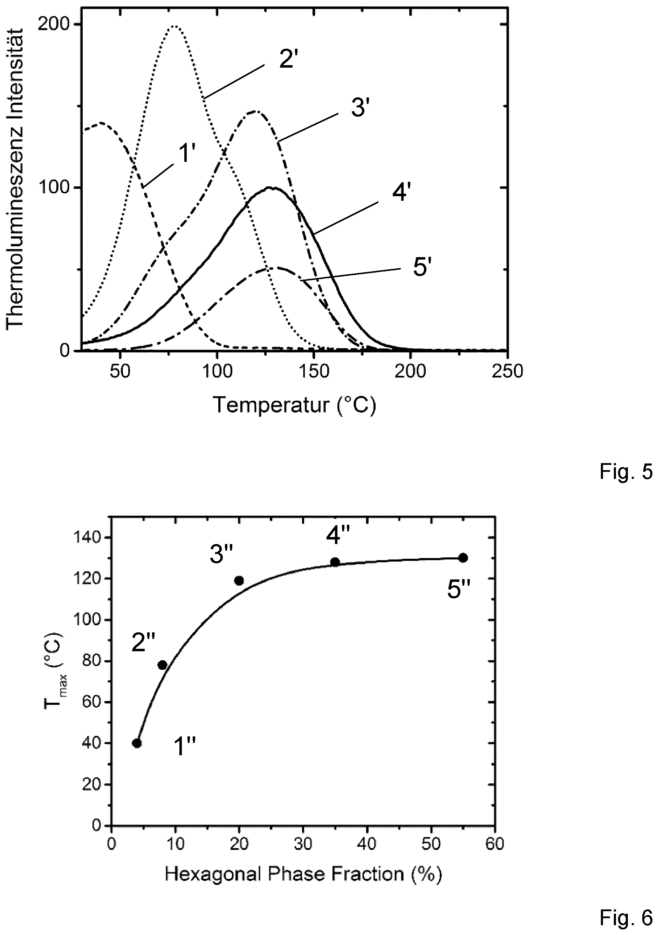

Fig. 5 zeigt die TSL-Glowkurven 1' bis 5' der in der obigen Tabelle beschriebenen zinksulfidischen Leuchtstoffe 1 bis 5. In diesem Falle wurden die Kurven nicht normiert, sodass die unter gleichen Messbedingungen ermittelten Intensitätsunterschiede aufgezeigt werden.

Darüber hinaus wird deutlich, dass sich die Temperaturmaxima der Glowkurven der untersuchten Leuchtstoffe unter dem Einfluss der in der obigen Tabelle angegebenen, steigenden, präparativ eingestellten hexagonalen Phasenanteile zu höheren Temperaturen verschieben.

Fig. 6 zeigt einen Zusammenhang zwischen den Temperaturmaxima $T_{max}$ der in Fig. 5 gezeigten TSL-Glowkurven und den hexagonalen Phasenanteilen der untersuchten Leuchtstoffe. Dabei zeigt sich, dass für die Temperaturmaxima der Glowkurven erst ab einem hexagonalen Phasenanteil von etwa 10 % Werte in dem im Sinne der Erfindung bevorzugten Bereich zwischen 120 °C und 150 °C erreicht werden.

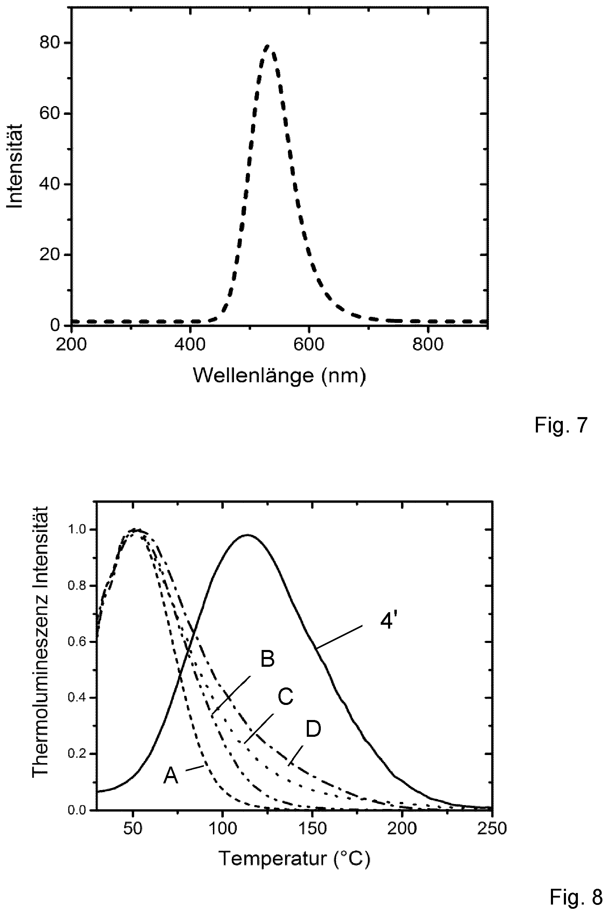

Fig. 7 zeigt ein Thermolumineszenz-Emissionsspektrum, welches den oben beschriebenen Referenzleuchtstoff (Leuchtstoff 4 in der Tabelle) umfasst. Überraschenderweise ist dieses Thermolumineszenz-Emissionsspektrum im Gegensatz zu dem für die stationäre Elektrolumineszenz des Leuchtstoffes durch eine vergleichsweise schmalbandige Emission mit einem Emissionsmaximum bei etwa 540 nm gekennzeichnet.

Fig. 8 zeigt abermals die TSL-Glowkurve des Referenzleuchtstoffes im Vergleich zu TSL-Glowkurven von Elektrolumineszenz-Leuchtstoffen A, B, C, D gemäß dem Stand der Technik, wie sie beispielsweise in Dickschicht-Elektrolumineszenz-Displays eingesetzt werden. Der Referenzleuchtstoff weist eine Elektrolumineszenz im tief roten Bereich des elektromagnetischen Spektrums auf. Die Elektrolumineszenz-Leuchtstoffe B und D zeigen demgegenüber eine Elektrolumineszenz im blauen Spektralbereich des sichtbaren Lichtes, während die Leuchtstoffe A und C nach Anregung mit der Hilfe elektrischer Wechselfelder im grünen Bereich emittieren. Bei den vorbekannten Elektrolumineszenz-Leuchtstoffen A-D handelt es sich um EL-Pigmente unterschiedlicher Hersteller. Alle dargestellten normierten TSL-Glowkurven wurden unter gleichen Bedingungen gemessen.

Im Gegensatz zu der charakteristischen Thermolumineszenz-Glowkurve des zinksulfidischen Referenzleuchtstoffes weisen die Glowkurven aller in den Vergleich einbezogenen Elektrolumineszenz-Leuchtstoffe A, B, C, D Temperaturmaxima auf, die nur geringfügig oberhalb einer Temperatur von 50 °C angesiedelt sind. Anders als im Falle des zinksulfidischen Leuchtstoffes des erfindungsgemäßen Sicherheitsmerkmales können die für das Auftreten von Thermolumineszenz-Effekten in diesem Niedrigtemperaturbereich verantwortlichen, verhältnismäßig flachen Haftstellen bereits durch das Hinzufügen relativ geringer Energien ohne zusätzliche Stimulation, also beispielsweise schon durch entsprechende Schwankungen der Raumtemperatur in Form von intensitätsschwachen Nachleuchtprozessen entleert werden.

Die Anwendung des zinksulfidischen Leuchtstoffes mit gezielt beeinflussten Phasenverhältnissen im erfindungsgemäßen Sicherheitsmerkmal eröffnet dagegen die Möglichkeit, die exklusive Thermolumineszenz-Charakteristik als ein alleiniges oder zusätzliches Kriterium für die Echtheitsverifizierung der mit dem erfindungsgemäßen Sicherheitsmerkmal ausgestatteten Wert- und Sicherheitsdokumente in Anwendung zu bringen.

Alternativ zum Hinzufügen thermischer Energie können die in den charakteristischen Gitterhaftstellen des zinksulfidischen Leuchtstoffes des erfindungsgemäßen Sicherheitsmerkmales nach entsprechender Anregung gespeicherte Elektronen, aber auch durch eine gezielte optische Stimulierung aus den Traps befreit und unter Aussendung einer entsprechenden Lumineszenzstrahlung in den elektronischen Grundzustand zurückgeführt werden.

Im Unterschied zu den für die Thermolumineszenz charakteristischen Glowkurven werden für die Optisch Stimulierte Lumineszenz spezifische Abklingkurven gemessen, die erfindungsgemäß ebenfalls als Echtheitskriterium verwendet werden können.

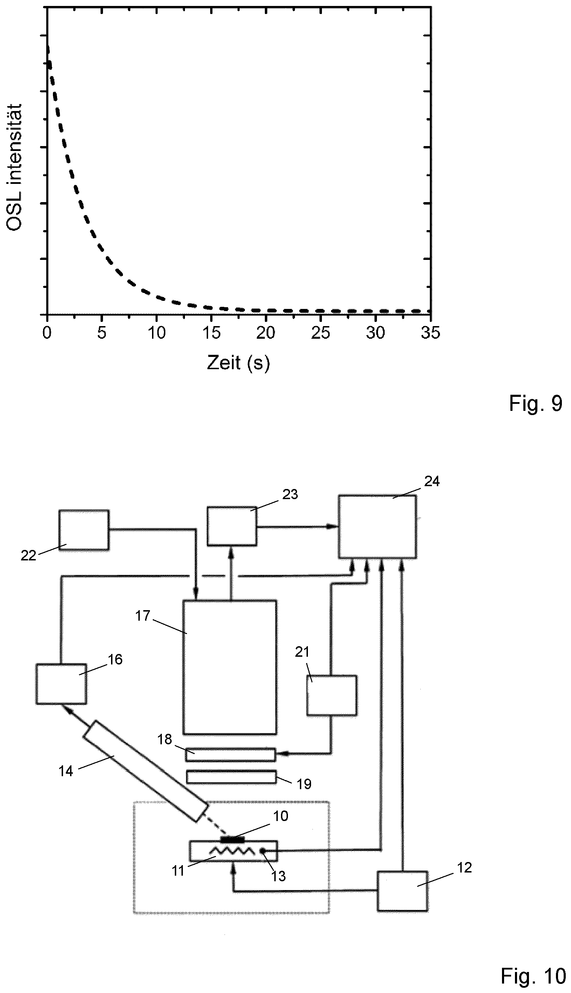

Fig. 9 zeigt eine charakteristische Abklingkurve für eine Optisch Stimulierte Lumineszenz eines Sicherheitsmerkmales, welches den oben beschriebenen zinksulfidischen Referenzleuchtstoff umfasst, dessen Thermolumineszenz-Glowkurve in Fig. 4 gezeigt ist. Das Sicherheitsmerkmal ist auf einem Banknotensubstrat positioniert. Nach dem Befüllen der Haftstellen unter erneuter Verwendung der 340 nm-Laser-Anregungsquelle und dem Einhalten einer entsprechenden Pause von 20 Sekunden erfolgte das Auslesen der gespeicherten Lichtsumme durch die optische Stimulation mit der Hilfe einer intensiven 750 nm-Laserstrahlung. Zuvor durchgeführte orientierende Versuche hatten ergeben, dass beim Einsatz einer derartigen Laser-Wellenlänge das größte Signal-Rausch-Verhältnis erreicht werden kann.

Die spektrale Verteilung des nach optischer Stimulierung des von dem zinksulfidischen Leuchtstoff des erfindungsgemäßen Sicherheitsmerkmales emittierten Lichtes stimmt mit derjenigen überein, die bei den entsprechenden TSL-Messungen ermittelt wurde. In Anbetracht des bei etwa 536 nm vorgefundenen Wellenlängenmaximums dieser Emission und der Anregungswellenlänge von 750 nm kann die infolge der optischen Stimulierung des erfindungsgemäßen Sicherheitsmerkmales Strahlungsumwandlung als Anti-Stokes-Lumineszenz klassifiziert werden.

Die exakte Gestalt der aus der optischen Stimulierung von Leuchtstoffen resultierenden Abklingkurven wird von verschiedenen Faktoren, darunter auch von der Laserleistung beeinflusst. Die unter definierten Bedingungen gemessenen Abklingkurven stellen aber exklusive Leuchtstoffkennlinien dar, die mit hoher Auslesegeschwindigkeit und ohne jedwede thermische Beanspruchung des erfindungsgemäßen Sicherheitsmerkmales mit hoher Sicherheit verifiziert werden können.

Fig. 10 zeigt eine schematische Darstellung einer optischen Anordnung zur Messung der in den Fig. 4 bis Fig. 9 gezeigten Spektren und Kurven. Der zinksulfidische Leuchtstoff bzw. das Sicherheitsmerkmal bildet eine Probe 10. Die Anordnung umfasst eine Heizvorrichtung 11, mit welcher die Probe 10 zum Zwecke der thermischen Stimulierung aufgeheizt werden kann. Die Heizvorrichtung 11 ist mit einer Heizungssteuerung 12 steuerbar. An der Heizvorrichtung 11 ist ein Thermoelement 13 angeordnet, um die von der Heizvorrichtung 11 erzeugte Temperatur messen zu können.

Die Anordnung umfasst zudem einen Laser 14, mit welchem die Probe 10 optisch angeregt werden kann. Der Laser 14 ist durchstimmbar und mit einer Laser-Steuerung 16 steuerbar. Der Laser 12 kann auch dazu verwendet werden, die für das Auftreten der exklusiven TSL- bzw. OSL-Effekte des erfindungsgemäßen Sicherheitsmerkmales verantwortlichen speziellen Gitterhaftstellen durch Anregung zu befüllen. Während dieser Anregung bleibt der Verschluss 18 vor der Lichtdetektionsvorrichtung 17 geschlossen. Die optischen Filter 19 werden so ausgewählt, dass die von der Probe 10 bei der jeweiligen thermischen oder optischen Anregung emittierten Wellenlängen mit hoher Effizienz gemessen werden können, während alle anderen Wellenlängen blockiert werden.

Die Anordnung umfasst weiterhin einer Lichtdetektionsvorrichtung 17, welche beispielsweise durch eine Photomultiplier Tube gebildet sein kann. Zwischen der Lichtdetektionsvorrichtung 17 und der Probe 10 sind ein optischer Verschluss 18 und ein oder mehrere optische Filter 19 angeordnet. Der Verschluss 18 wird mit einer Verschlusssteuerung 21 angesteuert. Eine Hochspannungseinheit 22 dient zur Versorgung der Lichtdetektionsvorrichtung 17 mit einer Hochspannung. Ein Ausgangssignal der Lichtdetektionsvorrichtung 17 wird mit einem Verstärker 23 verstärkt und zu einem Computer 24 geführt. Der Computer 24 dient im Übrigen zum Steuern der Heizungssteuerung 12, der Verschluss-steuerung 21 und der Hochspannungseinheit 22. Ein Ausgangssignal des Thermoelementes 13 ist ebenfalls zum Computer 24 geführt.

Bezugszeichenliste

1 Emissionsspektrum der Elektrolumineszenz eines ausschließlich mit Kupfer aktivierten zinksulfidischen Leuchtstoffes 1
2 Emissionsspektrum der Elektrolumineszenz eines ausschließlich mit Kupfer aktivierten zinksulfidischen Leuchtstoffes 2
3 Emissionsspektrum der Elektrolumineszenz eines ausschließlich mit Kupfer aktivierten zinksulfidischen Leuchtstoffes 3
4 Emissionsspektrum der Elektrolumineszenz eines ausschließlich mit Kupfer aktivierten zinksulfidischen Leuchtstoffes 4 (Referenzleuchtstoff)
5 Emissionsspektrum der Elektrolumineszenz eines ausschließlich mit Kupfer aktivierten zinksulfidischen Leuchtstoffes 5
1' Thermolumineszenz-Glowkurve des Leuchtstoffes 1
2' Thermolumineszenz-Glowkurve des Leuchtstoffes 2
3' Thermolumineszenz-Glowkurve des Leuchtstoffes 3
4' Thermolumineszenz-Glowkurve des Leuchtstoffes 4 (Referenzleuchtstoff)
5' Thermolumineszenz-Glowkurve des Leuchtstoffes 5
1" Temperaturmaximum der Glowkurve des Leuchtstoffes 1
2" Temperaturmaximum der Glowkurve des Leuchtstoffes 2
3" Temperaturmaximum der Glowkurve des Leuchtstoffes 3
4" Temperaturmaximum der Glowkurve des Leuchtstoffes 4 (Referenzleuchtstoff)
5" Temperaturmaximum der Glowkurve des Leuchtstoffes 5
6 Elektrolumineszenz-Emissionsspektrum eines zusätzlich mit 5 ppm Cobalt kodotierten Leuchtstoffes 6
7 Elektrolumineszenz-Emissionsspektrum eines zusätzlich mit 10 ppm Cobalt kodotierten Leuchtstoffes 7
5 Elektrolumineszenz-Emissionsspektrum eines zusätzlich mit 20 ppm Cobalt kodotierten Leuchtstoffes 8
10 Probe
11 Heizvorrichtung
12 Heizungssteuerung
13 Thermoelement
14 Laser
15 -
16 Laser-Steuerung
17 Lichtdetektionsvorrichtung
18 optischer Verschluss
19 optische Filter
20 -
21 Verschlusssteuerung
22 Hochspannungseinheit
23 Verstärker
24 Computer

**Patentansprüche**

1. Sicherheitsmerkmal für ein Sicherheits- und/oder Wertdokument, wobei das Sicherheitsmerkmal einen zinksulfidischen Leuchtstoff in Form von Partikeln umfasst, wobei der zinksulfidische Leuchtstoff die folgende allgemeine chemische Formel aufweist:

$$ZnS: Cu_x, M_y, X_z$$

mit:

    - M = ein oder mehrere Elemente aus einer die chemischen Elemente Co, In und Ni umfassenden Gruppe;
    - X = ein oder mehrere Elemente aus einer die Halogenide F, Cl, Br und I umfassenden Gruppe;
    - $0 < x \leq 0,002$;
    - $0 < y \leq 0,00015$; und
    - $0 \leq z \leq 0,00050$;

wobei die Partikel jeweils kubische Phasenanteile und hexagonale Phasenanteile aufweisen, wobei der zinksulfidische Leuchtstoff bei Anregung durch ein elektrisches Feld eine erste Lumineszenzstrahlung im Spektralbereich zwischen 580 nm und 780 nm emittiert, und wobei der zinksulfidische Leuchtstoff bei thermischer Stimulation und vorausgegangener Anregung mittels UV-Strahlung eine zweite Lumineszenzstrahlung im sichtbaren Spektralbereich emittiert.

2. Sicherheitsmerkmal nach Anspruch 1, **dadurch gekennzeichnet, dass** die hexagonalen Phasenanteile in den einzelnen Partikeln durchschnittlich im Bereich zwischen 20 % und 40 % liegen.

3. Sicherheitsmerkmal nach Anspruch 1 oder 2, **dadurch gekennzeichnet, dass** die erste Lumineszenzstrahlung ein Emissionsspektrum aufweist, welches aus einer Emissionsbande im tief-roten Spektralbereich besteht.

4. Sicherheitsmerkmal nach einem der Ansprüche 1 bis 3, **dadurch gekennzeichnet, dass** die zweite Lumineszenzstrahlung im grünen Spektralbereich emittiert wird.

5. Sicherheitsmerkmal nach einem der Ansprüche 1 bis 4, **dadurch gekennzeichnet, dass** die zweite Lumineszenzstrahlung ein Maximum mit einer Wellenlänge im Spektralbereich zwischen 520 nm und 550 nm aufweist.

6. Sicherheitsmerkmal nach einem der Ansprüche 1 bis 5, **dadurch gekennzeichnet, dass** die aufgrund der thermischen Stimulation emittierte zweite Lumineszenzstrahlung ein integrales Intensitätsmaximum (Thermolumineszenz-Glowkurve) im Temperaturbereich zwischen 120°C und 150°C aufweist.

7. Sicherheitsmerkmal nach einem der Ansprüche 1 bis 6, **dadurch gekennzeichnet, dass** der zinksulfidische Leuchtstoff die zweite Lumineszenzstrahlung auch emittiert, wenn er nach vorausgehender Anregung optisch stimuliert wird.

8. Sicherheitsmerkmal nach einem der Ansprüche 1 bis 7, **dadurch gekennzeichnet, dass** die Partikel eine mittlere Korngröße zwischen 2 $\mu$m und 50 $\mu$m, insbesondere zwischen 2 $\mu$m und 20 $\mu$m aufweisen.

9. Sicherheitsmerkmal nach einem der Ansprüche 1 bis 8, **dadurch gekennzeichnet, dass** der zinksulfidische Leuchtstoff folgende allgemeine chemische Formel aufweist:

$$ZnS: Cu_x, Co_y$$

mit $0 < x < 0,002$ und $0 < y \leq 0,00015$.

10. Sicherheits- und/oder Wertdokument mit einem Sicherheitsmerkmal nach einem der Ansprüche 1 bis 9.

11. Verfahren zur Detektion und/oder Verifikation eines einen Leuchtstoff aufweisenden Sicherheitsmerkmals gemäß einem der Ansprüche 1 bis 9 in einem Sicherheits- und/oder Wertdokument, folgende Schritte umfassend:

    a. Anregen des Leuchtstoffes (10) durch ein elektrisches Wechselfeld;
    b. Prüfen, ob infolge der Anregung durch das elektrische Wechselfeld in Schritt a. eine erste Lumineszenzstrahlung im Spektralbereich zwischen 580 nm und 780 nm emittiert wird;
    c. Anregen des Leuchtstoffs durch eine UV-Strahlung;
    d. Stimulation des angeregten Leuchtstoffes (10) durch eine thermische Stimulierung oder durch eine optische Stimulierung des Leuchtstoffes; und

e. Prüfen, ob infolge der Stimulation eine zweite Lumineszenzstrahlung im sichtbaren Spektralbereich emittiert wird.

**12.** Verfahren nach Anspruch 11, **dadurch gekennzeichnet, dass** jeweils ein Bestätigungssignal generiert wird, wenn in einem der ausgeführten Prüfschritte b. und/oder e. das Auftreten der geprüften ersten bzw. zweiten Lumineszenzstrahlung festgestellt wird.

**13.** Verfahren nach Anspruch 11 oder 12, **dadurch gekennzeichnet, dass** der Leuchtstoff zur thermischen Stimulierung auf eine Temperatur bis maximal 250°C erwärmt wird.

**14.** Verfahren nach einem der Ansprüche 11 bis 13, **dadurch gekennzeichnet, dass** im Fall der thermischen Stimulierung im Schritt e. die Intensität der emittierten zweiten Lumineszenzstrahlung mit einer vorbestimmten Thermolumineszenz-Glowkurve verglichen wird.

**15.** Verfahren nach einem der Ansprüche 11 bis 13, **dadurch gekennzeichnet, dass** im Fall der optischen Stimulierung im Schritt e. die Intensität der emittierten zweiten Lumineszenzstrahlung mit einer vorbestimmten Abklingkurve verglichen wird.

**Claims**

**1.** A security feature for a security and/or value document, wherein the security feature comprises a zinc sulphide luminophore in the form of particles, wherein the zinc sulphide luminophore has the following general chemical formula:

$$ZnS: Cu_x, M_y, X_z$$

in which:

- M = one or more elements from a group comprising the chemical elements Co, In and Ni
- X = one or more elements from a group comprising the halides F, Cl, Br, and I;
- $0 < x \leq 0.002$;
- $0 < y \leq 0.00015$; and
- $0 \leq z \leq 0.00050$;

wherein the particles each have cubic phase portions and hexagonal phase portions, wherein the zinc sulphide luminophore emits a first luminescence radiation in the spectral range between 580 nm and 780 nm when excited by an electric field and wherein the zinc sulphide luminophore emits a second luminescence radiation in the visible spectral range when thermally stimulated and previously excited by means of UV radiation.

**2.** The security feature according to claim 1, **characterized in that** the hexagonal phase portions in the individual particles fall on average in the range between 20 % and 40 %.

**3.** The security feature according to claim 1 or 2, **characterized in that** the first luminescence radiation has an emission spectrum that consists of an emission band in the deep-red spectral range.

**4.** The security feature according to any one of claims 1 to 3, **characterized in that** the second luminescence radiation is emitted in the green spectral range.

**5.** The security feature according to any one of claims 1 to 4, **characterized in that** the second luminescence radiation has a maximum with a wavelength in the spectral range between 520 nm and 550 nm.

**6.** The security feature according to any one of claims 1 to 5, **characterized in that** the second luminescence radiation emitted due to thermal stimulation has an integral intensity maximum (thermoluminescence glow curve) in the temperature range between 120 °C and 150 °C.

**7.** The security feature according to any one of claims 1 to 6, **characterized in that** the zinc sulphide luminophore also emits the second luminescence radiation when it is optically stimulated after prior excitation.

8. The security feature according to any one of claims 1 to 7, **characterized in that** the particles have an average grain size between 2 $\mu$m and 50 $\mu$m, in particular between 2 $\mu$m and 20 $\mu$m.

9. The security feature according to any one of claims 1 to 8, **characterized in that** the zinc sulphide luminophore has the following general chemical formula:

$$ZnS: Cu_x, Co_y$$

in which $0 < x < 0.002$ and $0 < y \leq 0.00015$.

10. A security and/or value document with a security feature according to any one of claims 1 to 9.

11. A method for the detection and/or verification of a security feature comprising a luminophore according to any one of claims 1 to 9 in a security and/or value document, comprising the following steps:

a. excitation of the luminophore (10) by an alternating electric field;
b. checking whether a first luminescence radiation in the spectral range between 580 nm and 780 nm is emitted as a result of the excitation by the alternating electric field in step a.,
c. excitation of the luminophore by UV radiation;
d. stimulation of the excited luminophore (10) by thermal stimulation or by optical stimulation of the luminophore; and
e. checking whether, as a result of the stimulation, a second luminescence radiation in the visible spectral range is emitted.

12. The method according to claim 11, **characterized in that** a confirmation signal is respectively generated when the occurrence of the tested first and/or second luminescence radiation is detected in one of the test steps performed b. and/or e.

13. The method according to claim 11 or 12, **characterized in that** the luminophore is heated to a temperature of up to a maximum of 250°C for thermal stimulation.

14. The method according to any one of claims 11 to 13, **characterized in that** in the case of the thermal stimulation in step e., the intensity of the emitted second luminescence radiation is compared with a predetermined thermoluminescence glow curve.

15. The method according to one of claims 11 to 13, **characterized in that** in the case of the optical stimulation in step e., the intensity of the emitted second luminescence radiation is compared with a predetermined decay curve.

**Revendications**

1. Elément de sécurité pour un document de sécurité et/ou de valeur, dans lequel l'élément de sécurité comprend un phosphore sulfuré de zinc sous forme de particules, dans lequel le phosphore sulfuré de zinc présente la composition chimique générale suivante :

$$ZnS : Cu_x, M_y, X_z$$

avec :

• M = un ou plusieurs Eléments d'un groupe comprenant les Eléments chimiques comprennent les groupes Co, In et Ni ;
• X = un ou plusieurs Eléments d'un Groupe comprenant les halogénures F, CI, Br et I ;
• $0 < x \leq 0{,}002$ ;
• $0 < y \leq 0{,}00015$ ; et
• $0 \leq z \leq 0{,}00050$ ;

dans lequel les particules présentent respectivement des composants de phase cubique et des composants de phase hexagonale, dans lequel le phosphore sulfuré de zinc émet lors de l'excitation par un champ électrique un premier rayonnement de luminescence dans la plage spectrale comprise entre 580 nm et 780 nm, et le phosphore sulfuré de zinc émet un deuxième rayonnement de luminescence dans la plage spectrale visible lors d'une stimulation thermique et d'une excitation préalable à l'aide d'un rayonnement UV.

2. Elément de sécurité selon la revendication 1, **caractérisé en ce que** les composants de phase hexagonale dans les particules sont en moyenne comprises entre 20 % et 40 %.

3. Elément de sécurité selon la revendication 1 ou 2, **caractérisé en ce que** la première luminescence présente un spectre d'émission, qui consiste en une bande d'émission dans la plage spectrale du rouge profond.

4. Elément de sécurité selon une des revendications 1 à 3, **caractérisé en ce que** le deuxième rayonnement luminescent est émis dans le domaine spectral vert.

5. Elément de sécurité selon une des revendications 1 à 4, **caractérisé en ce que** le deuxième rayonnement luminescent présente un maximum avec une longueur d'onde dans la plage spectrale comprise entre 520 nm et 550 nm.

6. Elément de sécurité selon une des revendications 1 à 5, **caractérisé en ce que** le deuxième rayonnement luminescent émis en raison de la stimulation thermique présente une intensité maximale intégrale (courbe de lueur de thermoluminescence) dans la plage de température comprise entre 120 °C et 150 °C.

7. Elément de sécurité selon une des revendications 1 à 6, **caractérisé en ce que** le phosphore sulfuré de zinc émet également le deuxième rayonnement luminescent lorsqu'il est optiquement stimulé après une stimulation précédente.

8. Elément de sécurité selon une des revendications 1 à 7, **caractérisé en ce que** les particules ont une taille de particule moyenne comprise entre 2 $\mu$m et 50 $\mu$m, notamment entre 2 $\mu$m et 20 $\mu$m.

9. Elément de sécurité selon une des revendications 1 à 8, **caractérisé en ce que** le phosphore sulfuré de zinc présente la formule chimique générale suivante :

$$ZnS : Cu_x, Co_y$$

avec $0 < x < 0{,}002$ et $0 < y \leq 0{,}00015$.

10. Document de sécurité et/ou de valeur comportant un élément de sécurité selon une des revendications 1 à 9.

11. Procédé pour en détecter et/ou vérifier un élément de sécurité contenant du phosphore selon une des revendications 1 à 9 dans un document de sécurité et/ou de valeur, comprenant les étapes suivantes consistant à :

    a. exciter le phosphore (10) par un champ alternatif électrique;
    b. vérifier si, suite à l'excitation par le champ alternatif électrique à l'étape a un premier rayonnement luminescent est émis dans la plage spectrale comprise entre 580 nm et 780 nm ;
    c. exciter le phosphore par rayonnement UV ;
    d. stimuler le phosphore excité (10) par une stimulation thermique ou par une stimulation optique du phosphore ; et
    e. vérifier si suite à la stimulation un deuxième rayonnement luminescent dans la plage spectrale visible est émis.

12. Procédé selon la revendication 11, **caractérisé en ce qu'**un signal de confirmation est généré lorsqu'à une des étapes de test effectuées b. et/ou e. l'apparition du premier ou du deuxième rayonnement luminescent testé est déterminée.

13. Procédé selon la revendication 11 ou 12, **caractérisé en ce que** le phosphore est chauffé par une stimulation thermique à une température allant jusqu'à un maximum de 250 °C.

14. Procédé selon une des revendications 11 à 13, **caractérisé en ce que** dans le cas d'une stimulation thermique à l'étape e. l'intensité du deuxième rayonnement luminescent émis est comparé avec une courbe de lueur de thermoluminescence prédéterminée.

**15.** Procédé selon une des revendications 11 à 13, **caractérisé en ce que** dans le cas d'une stimulation optique à l'étape e. l'intensité du deuxième rayonnement luminescent émis est comparée avec une courbe de décroissance pré-déterminée.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1151057 B1
- EP 3083882 B1
- EP 0964791 B1
- EP 1059619 B1
- EP 1149364 B1
- DE 102008047636 A1
- EP 1631461 B1
- EP 1748903 B1

**In der Beschreibung aufgeführte Nicht-Patentliteratur**

- **SHIONOYA, S.** ; **YEN, W. M.** Phosphor Handbook. CRC Press, 1999, 581-621
- **KRÖGER, F. A.** ; **DIKHOFF, J. A. M.** The Function of Oxygen in Zinc Sulfide Phosphors. *J. Electrochem. Soc.*, 1952, vol. 99, ISSN 0013-4651, 144-154
- **HOOGENSTRAATEN, W.** Electron Traps in Zinc-Sulfide Phosphors. *Philips Res. Repts*, 1958, vol. 13, ISSN 0031-7918, 515-693
- **GRASSER, R.** ; **SCHARMANN, A.** ; **WETZEL, G.** Thermolumineszenz von kubischem und hexagonalem ZnS/Cu. *Z. Naturforsch.*, 1973, vol. 28a (12), ISSN 0932-0784, 1378-1379
- **WITHNALL, R. et al.** Structure and Morphology of ACEL ZnS:Cu,Cl Phosphor Powder Etched by Hydrochloric Acid. *J. Electrochem. Soc.*, 2009, vol. 156 (11), ISSN 0013-4651, J326-J332
- **GOBRECHT, H.** ; **NELKOWSKI, H.** ; **ALBRECHT, P.** Zur Kristallstruktur der Zinksulfide. *Z. Naturforsch.*, 1961, vol. 16a (9), ISSN 0932-0784, 857-860
- **WITHNALL, R. et al.** Structure and Morphology of ACEL ZnS:Cu,Cl Phosphor Powder Etched by Hydrochloric Acid. *J. Electrochem. Soc.*, 2009, vol. 156 (11), ISSN 0013-4651
- **IRELAND, T. G.** ; **SILVER, J.** Studies on the Orientations of ACEL ZnS:Cu Particles in Applied AC Fields. *ECS Journal of Solid State Science and Technology*, 2014, vol. 3, ISSN 2162-8769, R25-R32